# EUROPEAN PATENT APPLICATION

(11) **EP 4 826 365 A1**
(43) Date of publication of application: **21.10.2026**
(21) Application number: 25853481.7
(22) Date of filing: 18.04.2025
(51) Int. Cl.: G01N 21/88, G01N 21/01

(54) **BATTERY PACK DETECTION DEVICE AND BATTERY PACK DETECTION METHOD**

(30) Priority: 15.08.2024 CN 202411124672
(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: LI, Chenfeng, Ningde, Fujian 352100 (CN); QIU, Guijia, Ningde, Fujian 352100 (CN); ZHANG, Kang, Ningde, Fujian 352100 (CN)
(74) Representative: Lorenz Seidler Gossel Part. mbB
(86) International application number: PCT/CN2025/089899
(87) International publication number: WO 2026/036776

(57) **Abstract**

A battery pack detection device and a battery pack detection method. The battery pack detection device comprises: a gantry truss (1), a first camera set (2), second camera sets (3), and a processor. The gantry truss (1) comprises a first frame (12) and a second frame (11), wherein the first frame (12) comprises first support beams (121), and a first linear element (42) is provided on the first support beams (121); and the second frame (11) comprises second support beams (111), and a second linear element (52) is provided on the second support beams (111). The first camera set (2) is slidably arranged on the first linear element (42) in a second direction, and is used for capturing top surface images of a battery pack. Two opposite second camera sets (3) each are slidably arranged on the second linear element (52) in the second direction, the second camera sets (3) are rotatably connected to the second linear element (52) around a third direction, and the second camera sets (3) are used for capturing side surface images and end surface images of the battery pack. The processor is used for receiving the top surface images, the side surface images, and the end surface images, and detecting the appearance of the battery pack on the basis of the top surface images, the side surface images, and the end surface images.

## Description

### CROSS-REFERENCE TO RELATED APPLICATION

The present disclosure is presented based on Chinese Patent Application No. 202411124672.3, filed on August 15, 2024, and entitled "BATTERY PACK INSPECTION APPARATUS AND BATTERY PACK INSPECTION METHOD", and claims priority to the Chinese Patent Application, the content of which is incorporated herein by reference in its entirety.

### TECHNICAL FIELD

The present disclosure relates to the technical field of batteries, and in particular, to a battery pack inspection apparatus and a battery pack inspection method.

### BACKGROUND

Applications of new energy batteries in daily life and industries are becoming increasingly widespread. For example, new energy vehicles equipped with batteries have been widely used. In addition, batteries are increasingly applied to the field of energy storage and the like.

During the production of batteries, the appearance of the batteries needs to be inspected to determine whether defects exist on the surfaces of the batteries. Particularly for a battery, the housing of the battery is provided with a large number of components. The surface of the housing and the appearance of the components on the housing need to be inspected to reduce the problem of battery defects. In the related art, the appearance of the battery is often inspected manually, but manual inspection has the problem of missed inspections caused by human factors, and the efficiency of manual inspection is relatively low.

### SUMMARY

The present disclosure provides a battery pack inspection apparatus and a battery inspection method, which can improve the accuracy and inspection efficiency of the battery appearance inspection.

A first aspect of the present disclosure provides a battery pack inspection apparatus, and the battery pack inspection apparatus includes: a gantry truss, a first camera set, a second camera set, and a processor. The gantry truss includes a first frame body and a second frame body; the first frame body includes two first support beams provided to extend in a first direction, and a first linear module is slidably disposed on the two first support beams in the first direction; the second frame body includes two second support beams provided to extend in the first direction, and a second linear module is slidably disposed on the two second support beams in the first direction. The first camera set is slidably disposed on the first linear module in a second direction and is configured to capture a top surface image of a battery pack; the second direction is perpendicular to the first aspect. Two oppositely disposed second camera sets are each slidably disposed on the second linear module in the second direction, and the second camera sets are rotatably connected to the second linear module around a third direction; the second camera sets are configured to capture a side surface image and an end surface image of the battery pack; the third direction is perpendicular to the first direction, and the third direction is perpendicular to the second direction. The processor is configured to receive the top surface image, the side surface image, and the end surface image, and inspect an appearance of the battery pack based on the top surface image, the side surface image, and the end surface image.

In the battery pack inspection apparatus according to the present disclosure, since the gantry truss includes the first frame body and the second frame body, the first camera set may be slidably disposed on the first support beam of the first frame body via the first linear module, and the top surface image of the top surface of the battery pack can be acquired by the first camera set. Additionally, the first camera set is slidably disposed on the first linear module, such that the first camera set can be driven by the first linear module to move relative to the top surface of the battery pack, thereby facilitating the acquisition of the top surface images of various areas of the top surface by the first camera set. Alternatively, the two second camera sets may be slidably disposed on the second support beam of the second frame body via the second linear module, and the two second camera sets may be slidably disposed on the second linear module. The second camera sets are also rotatably connected to the second linear module; the second camera sets can be driven by the second linear module to move relative to the side surface or the end surface of the battery pack, and the second camera sets can be rotated to face the side surface or the end surface, thereby facilitating the acquisition, by the second camera sets, of the side surface images of various areas of the side surface and the end surface images of various areas of the end surface. Furthermore, the first camera set and the second camera set are disposed on the first frame body and the second frame body, respectively, such that the first camera set and the second camera set can move independently, which is conducive to reducing the mutual interference between the first camera set and the second camera set during movement, thereby improving the image acquisition efficiency for the battery pack. Additionally, the processor can receive the top surface image, the side surface image, and the end surface image, and the processor can be utilized to identify and inspect the top surface image, the side surface image, and the end surface image to determine whether a defect exists in the images, thereby improving the accuracy and inspection efficiency of the appearance inspection for the battery pack.

In a possible implementation of the present disclosure, the first camera set includes a first 3D scanning camera and a first bracket provided with a first accommodating cavity; the first bracket includes a first top plate and two first side plates, and upper ends of the two first side plates are fixed to two ends of the first top plate, respectively; the first top plate and the two first side plates define the first accommodating cavity, and a first opening of the first accommodating cavity faces a top surface of the battery pack in a third direction; the first bracket is slidably disposed on the first linear module via the first top plate or the first side plates; the third direction is perpendicular to the first direction, and the third direction is perpendicular to the second direction. The first 3D scanning camera is fixed to the first top plate and is located outside the first accommodating cavity, and the first 3D scanning camera is configured to capture a 3D top surface image of the battery pack.

In the technical solution of the present disclosure, since the first bracket includes the first top plate and the two first side plates, the first accommodating cavity can be defined by the first top plate and the two first side plates, and a plurality of mounting points can be provided for the plurality of cameras in the first camera set by the first top plate and the two first side plates. Additionally, the first 3D scanning camera is fixed to the first top plate, and the first 3D scanning camera is located outside the first accommodating cavity, such that the first 3D scanning camera can be utilized to acquire the 3D top surface image of the battery pack, thereby allowing the depth information of the top surface of the battery pack to be obtained based on the 3D top surface image. In addition, the occlusion of the capturing area of the first 3 scanning camera caused by the first side plates can be reduced.

In a possible implementation of the present disclosure, the first camera set further includes a first 2D line scan camera; the first 2D line scan camera is fixed to one of the first side plates and is located outside the first accommodating cavity, staggered from a fixing position of the first 3D scanning camera; the first 2D line scan camera faces a top surface of the battery and is configured to capture a first line scan image of the top surface.

In the technical solution of the present disclosure, since the first camera set further includes the first 2D line scan camera, the area of the top surface of the battery pack can be captured by the first 2D line scan camera, so as to facilitate the acquisition of the first line scan image containing the overall planar information of the top surface of the battery pack, thereby obtaining the 2D image information of the top surface. Such a configuration facilitates the combination of the 2D line scan image of the top surface with the 3D image of the top surface to obtain more comprehensive information of the top surface image. Additionally, the first 2D line scan camera is located outside the first accommodating cavity and is disposed on the first bracket in a staggered manner with the first 3D scanning camera, such that the occlusion of the first 3D scanning camera caused by the first 2D line scan camera can be reduced.

In a possible implementation of the present disclosure, the first camera set further includes a first bar light source; the first bar light source is rotatably disposed on an outer wall of the first side plate, an illumination area of the first bar light source covers a capturing area of the first 2D line scan camera on the top surface, and the first bar light source is configured to illuminate the top surface.

In the technical solution of the present disclosure, since the first bar light source is fixed to the outer wall of the first side plate on which the first 2D line scan camera is mounted, the capturing area of the first 2D line scan camera can be illuminated by the first bar light source, which is conducive to improving the quality of the first line scan image acquired by the first 2D line scan camera. Additionally, the occlusion of the first 3D scanning camera caused by the first bar light source can be reduced.

In a possible implementation of the present disclosure, the first camera set further includes a first 2D camera; the first 2D camera is fixed to the other first side plate, and is located outside the first accommodating cavity and on a side close to the first opening; the first 2D camera faces a top surface of the battery pack and is configured to capture a 2D top surface image of the top surface.

In the technical solution of the present disclosure, since the first camera set further includes the first 2D camera, the 2D top surface image of the battery pack can be acquired by the first 2D camera, so as to obtain the image information of components, such as labels and nameplates, on the top surface of the battery pack, such that detailed parts, such as the components on the top surface of the battery pack, can also be detected. Additionally, the first 2D camera is fixed to the outer wall of the other first side plate, such that a relatively long distance can be kept between the first 2D camera and the first 3D scanning camera, as well as between the first 2D camera and the first 2D line scan camera, which is conducive to reducing the mutual occlusion among the cameras.

In a possible implementation of the present disclosure, the first camera set further includes two second bar light sources; the second bar light sources are fixed to the first side plate on which the first 2D camera is disposed, the second bar light sources are located outside the first accommodating cavity and on a side close to the first opening, and the two second bar light sources are symmetrically disposed on two sides of the first 2D camera; an illumination area of the second bar light sources covers a capturing area of the first 2D camera on a top surface of the battery pack, and the second bar light sources are configured to illuminate the top surface of the battery pack.

In the technical solution of the present disclosure, since the second bar light source is fixed to the outer wall of the first side plate on which the first 2D camera is mounted, the capturing area of the first 2D camera can be illuminated by the second bar light source, which is conducive to improving the quality of the 2D top surface image acquired by the first 2D camera. Additionally, providing two second bar light sources can make the brightness of the capturing area of the first 2D camera more uniform.

In a possible implementation of the present disclosure, the first camera set further includes a first annular light source; the first annular light source is fixed to the first side plate on which the first 2D camera is disposed, and the first annular light source is located outside the first accommodating cavity and on a side close to the first opening; the first annular light source is coaxially disposed with the first 2D camera, an illumination area of the first annular light source covers a capturing area of the first 2D camera on a top surface of the battery pack, and the first annular light source is configured to illuminate the top surface of the battery pack.

In the technical solution of the present disclosure, since the first 2D camera is provided with the first annular light source, and the first annular light source is coaxially disposed with the first 2D camera, the capturing area of the first 2D camera on the top surface of the battery pack can be illuminated by the first annular light source, such that the capturing area of the first 2D camera can become brighter, which is conducive to improving the quality of the 2D top surface image acquired by the first 2D camera, thereby improving the accuracy of defect determination for the top surface of the battery pack.

In a possible implementation of the present disclosure, the first camera set further includes a first 3D camera; the first 3D camera is movably disposed on an inner wall of the first top plate and is located between the first 2D line scan camera and the first 2D camera; the first 3D camera faces a top surface of the battery pack and is configured to capture an image of a pin header connector on the top surface of the battery pack.

In the technical solution of the present disclosure, since the first camera assembly further includes the first 3D camera movably disposed on the inner wall of the first top plate, the image of the pin header connector of a connector, such as a pogo pin, on the top surface of the battery pack can be captured by the first 3D camera, such that whether the mounting angle and the mounting position of the pin header connector are appropriate can be determined according to the image of the pin header connector.

In a possible implementation of the present disclosure, the first camera set further includes a first rotating member and a first sliding member; the first sliding member is fixed to an inner wall of the first top plate, the first rotating member is connected to the first sliding member, and the first 2D camera is disposed on the first rotating member; the first sliding member is capable of driving the first rotating member to move relative to the first bracket in the third direction, and the first rotating member is capable of driving the first 3D camera to rotate around the third direction.

In the technical solution of the present disclosure, since the first 3D camera is disposed on the inner wall of the first top plate via the first rotating member and the first sliding member, the first 3D camera can be driven by the first sliding member to move in the third direction, and the first 3D camera can be driven by the first rotating member to rotate around the third direction, thereby facilitating the adjustment of the distance and the included angle between the first 3D camera and the pin header connector, such that the first 3D camera can comprehensively capture the images of the pin header connector from multiple angles, thereby improving the inspection precision of the mounting condition of the pin header connector.

In a possible implementation of the present disclosure, the battery pack inspection apparatus further includes a third rotating member; the first bracket is connected to the first linear module via the third rotating member, and the third rotating member is configured to drive the first camera set to rotate around a third direction.

In the technical solution of the present disclosure, since the first camera set is connected to the first linear module via the third rotating member, the first camera set can be driven by the third rotating member to rotate around the third direction, such that the included angle between the first camera set and the top surface of the battery pack can be adjusted. In this way, the cameras in the first camera set can be oriented to face the plane in the top surface of the battery pack or the protruding components on the top surface of the battery pack at different angles, such that the capturing direction and the capturing angle of the cameras in the first camera set for the protruding components can be adjusted, which is conducive to obtaining the relatively comprehensive and clear images of the protruding components on the top surface of the battery pack, thereby further improving the accuracy of defect determination and identification for the top surface of the battery pack.

In a possible implementation of the present disclosure, the battery pack inspection apparatus further includes a third linear module; the third linear module is slidably disposed on the first linear module in the third direction, the third rotating member is connected to the third linear module, and the third linear module is capable of driving the first camera set to move in the third direction.

In the technical solution of the present disclosure, since the first camera set is connected to the first linear module via the third linear module, the first camera set can be driven by the third linear module to move in the third direction, such that the distance between the first camera set and the top surface of the battery pack can be adjusted. In this way, the focal length between the cameras in the first camera set and the top surface of the battery pack can be conveniently adjusted.

In a possible implementation of the present disclosure, a height sensor is provided on the third linear module or the first bracket, and the height sensor is configured to detect a height distance between the first camera set and a top surface of the battery pack in the third direction, so as to adjust the height distance.

In the technical solution of the present disclosure, since the height sensor is provided on the third linear module or the first bracket, the height distance information between the first camera set and the top surface of the battery pack can be obtained in time by means of the height sensor, such that the third linear module can be timely and quickly controlled to move based on the height distance, so as to adjust the distance between the first camera set and the top surface of the battery pack, and thus the height distance can be adjusted to make the height distance consistent with a preset capturing distance.

In a possible implementation of the present disclosure, the second camera set includes a second bracket and a second 2D camera; the second bracket is perpendicular to the third direction, and in the third direction, one side of the second bracket is slidably connected to the second linear module; the second 2D camera is obliquely disposed on the second bracket at a preset angle, and is located on a side, close to the second linear module, of the second bracket, and the second 2D camera is configured to capture an edge image of an edge between a top surface and a side surface of the battery pack or an edge between the top surface and an end surface of the battery pack.

In the technical solution of the present disclosure, since the second bracket is perpendicular to the third direction, the large surface area of the second bracket can be utilized to provide a plurality of mounting points for a plurality of cameras in the second camera set. Additionally, the second 2D camera is fixed to the side, close to the second linear module, of the second bracket, such that the second 2D camera can be obliquely located, at a preset angle, at the edge of the second bracket, which not only can reduce the occlusion of the second 2D camera caused by the second bracket, but also can reduce the occlusion of other components in the second camera set caused by the second 2D camera. Furthermore, the clear edge image of the edge on the battery pack can be acquired by the second 2D camera, such that whether a defect exists on the edge of the battery pack can be determined according to the edge image.

In a possible implementation of the present disclosure, the second camera set further includes two third bar light sources; the third bar light sources are obliquely disposed on the second bracket at the preset angle and are symmetrically disposed on two sides of the second 2D camera, and the third bar light sources are configured to illuminate the edge captured by the second 2D camera.

In the technical solution of the present disclosure, since the third bar light source is obliquely disposed on the second bracket at a preset angle, the capturing area of the second 2D camera can be illuminated by the third bar light source, which is conducive to improving the quality of the edge image of the edge acquired by the second 2D camera. Additionally, providing two third bar light sources can make the brightness on the edge captured by the second 2D camera more uniform.

In a possible implementation of the present disclosure, the second camera set further includes a second 3D camera; the second 3D camera is rotatably disposed on the second bracket via a second rotating member, and is located on a side, away from the second linear module, of the second bracket; the second rotating member is capable of driving the second 3D camera to rotate relative to the second bracket around the first direction or the second direction, and the second 3D camera is configured to capture an image of a pin header connector on a side surface or an end surface of the battery pack.

In the technical solution of the present disclosure, since the second camera set further includes the second 3D camera, images of pin header connectors of connectors, such as pogo pins, on the side surface and the end surface of the battery pack can be captured by the second 3D camera, such that whether the mounting angle and the mounting position of the pin header connectors are appropriate can be determined according to the images of the pin header connectors. Additionally, the second 3D camera is disposed on the second bracket via the second rotating member, such that the second 3D camera can be driven by the second rotating member to rotate around the first direction or the second direction, thereby facilitating the adjustment of the included angle between the second 3D camera and the pin header connector, and thus capturing a clearer image of the pin header connector.

In a possible implementation of the present disclosure, the second camera set further includes a third 2D camera; the third 2D camera is slidably disposed on the second bracket in the first direction or the second direction, and is located on a side, away from the second linear module, of the second bracket; the third 2D camera and the second 3D camera are spaced apart from each other on the second bracket, and the third 2D camera is configured to capture a 2D side surface image or a 2D end surface image of the battery pack.

In the technical solution of the present disclosure, since the second camera set further includes the third 2D camera, the 2D side surface image and the 2D end surface image of the side surface and the end surface of the battery pack can be acquired by the third 2D camera, so as to obtain the image information of components, such as labels and nameplates, on the side surface and the end surface of the battery pack, such that detailed parts, such as the components on the side surface and the end surface of the battery pack, can also be detected. Additionally, the third 2D camera is slidably disposed on the second bracket in the first direction or the second direction, thereby facilitating the adjustment of the distance between the third 2D camera and the side surface, as well as the distance between the third 2D camera and the end surface of the battery pack.

In a possible implementation of the present disclosure, the second camera set further includes a second sliding member; the second sliding member is fixed to a side, away from the second linear module, of the second bracket, the third 2D camera is disposed on the second sliding member, and the second sliding member is capable of driving the third 2D camera to move relative to the second bracket in the first direction or the second direction.

In the technical solution of the present disclosure, since the third 2D camera is disposed on the second bracket via the second sliding member, the third 2D camera can be driven by the second sliding member to move relative to the second bracket in the first direction or the second direction.

In a possible implementation of the present disclosure, the second camera set further includes a second annular light source; the second annular light source is fixed to the second sliding member, is located on a side, close to a side surface or an end surface of the battery pack, of the third 2D camera, and is coaxially disposed with the third 2D camera; the second annular light source is configured to illuminate a capturing area of the third 2D camera on the side surface or the end surface of the battery pack.

In the technical solution of the present disclosure, since the third 2D camera is provided with the second annular light source, and the second annular light source is coaxially disposed with the third 2D camera, the capturing area of the third 2D camera on the side surface and the end surface of the battery pack can be illuminated by the second annular light source, such that the capturing area of the third 2D camera can become brighter, which is conducive to improving the quality of the 2D side surface image and the 2D end surface image acquired by the third 2D camera, thereby improving the accuracy of defect determination for the side surface and the end surface of the battery pack.

In a possible implementation of the present disclosure, the second camera set further includes two fourth bar light sources; the fourth bar light sources are fixed to a side, away from the second linear module, of the second bracket, and are located on a side, close to a side surface or an end surface of the battery pack, of the third 2D camera; the two fourth bar light sources are symmetrically disposed on two sides of the third 2D camera; an illumination area of the fourth bar light sources covers a capturing area of the third 2D camera on the side surface or the end surface of the battery pack, and the fourth bar light sources are configured to illuminate the capturing area of the third 2D camera.

In the technical solution of the present disclosure, since the two fourth bar light sources are symmetrically disposed on the two sides of the third 2D camera, the capturing area of the third 2D camera can be illuminated by the fourth bar light sources, which is conducive to improving the quality of the 2D side surface image and the 2D end surface image acquired by the third 2D camera. Additionally, providing two fourth bar light sources can make the brightness of the capturing area of the third 2D camera more uniform.

In a possible implementation of the present disclosure, the second camera set further includes a second 3D scanning camera; the second 3D scanning camera is fixed to a side, away from the second linear module, of the second bracket, and is located between the second 3D camera and the third 2D camera; the second 3D scanning camera is configured to capture a 3D side surface image or a 3D end surface image of the battery pack.

In the technical solution of the present disclosure, since the second 3D scanning camera is fixed to the side, away from the second linear module, of the second bracket, the second 3D scanning camera can be utilized to acquire the 3D side surface image and the 3D end surface image of the battery pack, thereby obtaining the depth information of the side surface and the end surface of the battery pack according to the 3D side surface image and the 3D end surface image. Additionally, the second 3D scanning camera is located between the second 3D camera and the third 2D camera, which can reduce the mutual occlusion among the second 3D scanning camera, the second 3D camera, and the third 2D camera.

In a possible implementation of the present disclosure, the second camera set further includes a second 2D line scan camera; the second 2D line scan camera is fixed to a side, away from the second linear module, of the second bracket, and is located at an end, away from the third 2D camera, of the second bracket; the second 2D line scan camera is configured to capture a side surface line-scan image or an end surface line-scan image of the battery pack.

In the technical solution of the present disclosure, since the second camera set further includes the second 2D line scan camera, areas of the side surface and the end surface of the battery pack can be captured by the second 2D line scan camera, so as to facilitate the acquisition of the side surface line-scan image and the end surface line-scan image containing the overall planar information of the side surface and the end surface of the battery pack, thereby obtaining the 2D image information of the side surface and the end surface. Furthermore, the 2D line scan images of the side surface and the end surface can be combined with the 3D images of the side surface and the end surface, respectively, which helps to obtain more comprehensive information of the side surface image and the end surface image.

In a possible implementation of the present disclosure, the second camera set further includes a fifth bar light source; the fifth bar light source is rotatably disposed on the second bracket around a third direction, and is located on a side, close to the battery pack, of the second 2D line scan camera; the fifth bar light source is configured to illuminate a capturing area of the second 2D line scan camera on the battery pack.

In the technical solution of the present disclosure, since the fifth bar light source is disposed at a position on the second bracket adjacent to the second 2D line scan camera, the capturing area of the second 2D line scan camera can be illuminated by the fifth bar light source, which is conducive to improving the quality of the side surface line-scan image and the end surface line-scan image captured by the second 2D line scan camera. Additionally, the fifth bar light source is rotatably disposed on the second bracket, such that the adjustment of the illumination area of the fifth bar light source on the side surface or the end surface of the battery pack is facilitated, thereby enabling the illumination area of the fifth bar light source to coincide with the capturing area of the second 2D line scan camera.

In a possible implementation of the present disclosure, the battery pack inspection apparatus further includes a fourth rotating member; the second bracket is connected to the second linear module via the fourth rotating member; in a case where the second linear module moves, in the first direction, to one of two ends of the two second support beams, the fourth rotating member is capable of driving the second camera set to rotate to face an end surface of the battery pack, or the fourth rotating member is capable of driving the second camera set to rotate to face a side surface of the battery pack.

In the technical solution of the present disclosure, since the second bracket is connected to the second linear module via the fourth rotating member, the second camera set can be driven by the fourth rotating member to rotate around the third direction, such that the orientation of the cameras in the second camera set can be adjusted; that is, the cameras in the second camera assembly can be oriented to face the side surface of the battery pack or the end surface of the battery pack. In this way, the second camera set can be utilized to capture both the side surface image of the battery pack and the end surface image of the battery pack, which is conducive to improving the utilization efficiency of the second camera set.

In a possible implementation of the present disclosure, the battery pack inspection apparatus further includes a fourth linear module; the fourth linear module is slidably disposed on the second linear module in the third direction, the fourth rotating member is connected to the fourth linear module, and the fourth linear module is capable of driving the second camera set to move in the third direction.

In the technical solution of the present disclosure, since the fourth rotating member is connected to the second linear module via the fourth linear module, the second camera set can be driven by the fourth linear module to move in the third direction, such that the position of the second camera set, relative to the side surface and the end surface of the battery pack in the third direction, can be adjusted, thereby capturing the side surface images and the end surface images of various areas of the side surface and the end surface.

In a possible implementation of the present disclosure, the battery pack inspection apparatus further includes a position detection member; in the first direction, at least one end of the first support beam is fixed with the position detection member; the position detection member is configured to detect a position of the first linear module on the first support beam, to cause the first linear module to stop moving relative to the first support beam, or to cause the first linear module to be at an origin position relative to the first support beam; and/or, in the first direction, at least one end of the second support beam is provided with the position detection member; the position detection member is configured to detect a position of the second linear module on the second support beam, to cause the second linear module to stop moving relative to the second support beam, or to cause the second linear module to be at an origin position relative to the second support beam.

In the technical solution of the present disclosure, since the position sensor is provided for the first linear module and/or the second linear module, the position of the first linear module relative to the first support beam can be detected by the position sensor, and the position of the second linear module relative to the second support beam can be detected by the position sensor, such that whether the first linear module and/or the second linear module have moved to a desired position can be determined, which is conducive to improving the accuracy of the movement position of the first linear module and/or the second linear module.

In a possible implementation of the present disclosure, the battery pack inspection apparatus further includes a positioning device, and the positioning device includes a positioning base, a lifting mechanism, and a positioning mechanism; the positioning base is disposed adjacent to the second frame body; the lifting mechanism is slidably disposed on the positioning base in a third direction and is configured to drive the battery pack to move, in the third direction, toward or away from the first camera set; the positioning mechanism is slidably disposed on the positioning base and is capable of moving in a direction toward the battery pack to limit a position of the battery pack relative to the gantry truss.

In the technical solution of the present disclosure, since the lifting mechanism is provided in the positioning device, the battery pack can be lifted by a certain distance in the third direction by means of the lifting mechanism, such that each battery pack can be at a determined height relative to the first camera set. Additionally, a positioning structure is disposed in the positioning device, and the position of the battery pack relative to the gantry truss can be limited by means of the positioning mechanism, such that each battery pack can be at a determined position relative to the first camera set in a horizontal plane, thereby facilitating the improvement in the quality of the top surface image, the side surface image, and the end surface image of the battery pack acquired by the first camera set and the second camera set.

In a possible implementation of the present disclosure, the positioning mechanism includes a transport positioning assembly and a tray positioning assembly; the positioning mechanism is slidably disposed on the positioning base in the first direction and is capable of moving, in the first direction, toward a conveying device of the battery pack; the tray positioning assembly is slidably disposed on a side, close to the first camera set, of the positioning base in the third direction and is capable of moving, in the third direction, toward a tray supporting the battery pack.

In the technical solution of the present disclosure, since the transport positioning assembly is provided in the positioning mechanism, a transporting member for conveying the battery can be limited to a fixed position relative to the gantry truss by means of the transport positioning assembly. The tray positioning assembly is further provided in the positioning mechanism, and the tray supporting the battery can be limited to a fixed position by means of the tray positioning assembly, such that the battery can be limited to a fixed position relative to the gantry truss.

In a possible implementation of the present disclosure, the positioning device further includes a guiding assembly, and the guiding assembly includes two sets of guide frames; the guide frames are provided to extend in the first direction, and both ends of the guide frames are bent in a direction away from a side surface of the battery pack to guide the battery pack into a limiting space formed by the two sets of guide frames; each of the guide frames is provided with a plurality of guide wheels spaced apart from each other along an extension direction of the guide frame; in a case where an edge of the conveying device contacts the guide wheels, the guide wheels rotate to limit a movement path of the conveying device.

In the technical solution of the present disclosure, since the guiding assembly is provided in the positioning device, the movement path of the conveying device, during the movement of the conveying device toward the positioning device, can be guided and limited by the guiding assembly, and the friction between the conveying device and the positioning device can be reduced by the guide wheels in the guiding assembly.

Compared with manual visual inspection, the battery pack inspection apparatus described above not only improves the production efficiency while realizing an unmanned assembly line inspection, but also achieves a comprehensive high-definition three-dimensional imaging of the appearance information of the five large surfaces, namely, a top surface, side surfaces, and end surfaces of the battery pack, by means of the layout of cameras on the battery pack inspection apparatus. As a result, inspection accuracy and consistency are improved, thereby realizing effective and stable inspection of the quality of the battery pack in a shorter inspection time.

A second aspect of the present disclosure provides a battery pack inspection method, applicable to the battery pack inspection apparatus according to any one of the implementations in the first aspect. The battery pack inspection method includes: controlling, in response to a top capturing instruction, a first linear module to slide on a first support beam in a first direction, and/or controlling a first camera set to slide on the first linear module in a second direction, such that the first camera set moves relative to a top surface of a battery pack and captures a top surface image of the battery pack; controlling, in response to a side capturing instruction, a second linear module to slide on a second support beam in the first direction, and/or controlling a second camera set to slide on the second linear module in the second direction, and/or controlling the second camera set to rotate relative to the second linear module around a third direction, such that the second camera set moves relative to a side surface or an end surface of the battery pack and captures a side surface image and an end surface image of the battery pack; and inspecting an appearance of the battery pack based on the top surface image, the side surface image, and the end surface image.

In the battery inspection method according to the present disclosure, during the inspection of the battery pack, since the top surface image of the top surface of the battery pack can be acquired by the first camera set, and the side surface image of the side surface of the battery pack and the end surface image of the end surface of the battery pack can be acquired by the second camera set, a plurality of images, which can characterize whether a defect exists in the appearance of the battery pack, can be obtained. Additionally, the processor or the like may be utilized to identify and inspect the top surface image, the side surface image, and the end surface image, to determine whether a defect exists in the top surface image, the side surface image, or the end surface image, thereby improving the accuracy and inspection efficiency of the appearance inspection for the battery pack.

In a possible implementation of the present disclosure, controlling, in response to the side capturing instruction, the second linear module to slide on the second support beam in the first direction, and/or controlling the second camera set to slide on the second linear module in the second direction, and/or controlling the second camera set to rotate relative to the second linear module around the third direction, such that the second camera set moves relative to the side surface or the end surface of the battery pack and captures the side surface image and the end surface image of the battery pack, includes: controlling the second linear module to slide on the second support beam in the first direction, such that the second camera set moves relative to a side surface of the battery pack, and controlling the second camera set to rotate relative to the second linear module around the third direction, such that a capturing direction of the second camera set faces the side surface of the battery pack, and a side surface image of the battery pack is captured; controlling the second linear module to slide on the second support beam in the first direction until the second camera set extends beyond, in the first direction, a space in which the battery pack is located; and controlling the second camera set to slide on the second linear module in the second direction, such that the second camera set moves relative to an end surface of the battery pack, and controlling the second camera set to rotate relative to the second linear module around the third direction, such that a capturing direction of the second camera set faces the end surface of the battery pack, and an end surface image of the battery pack is captured.

In the technical solution of the present disclosure, since the second linear module is controlled to move in the first direction, the second camera set is controlled to move in the second direction, and the second camera set is controlled to rotate around the third direction, the second camera set can move to positions corresponding to each side surface and each end surface, and the capturing direction of the second camera set can face each side surface and each end surface of the battery pack; furthermore, the second camera set can be driven to move relative to each side surface and each end surface, such that the second camera set can be utilized to complete the capturing of the side surface images of all side surfaces of the battery pack, and complete the capturing of the end surface images of all end surfaces.

In a possible implementation of the present disclosure, the first camera set of the battery pack inspection apparatus includes a first 3D camera, a first rotating member, and a first sliding member; the first sliding member is fixed to a first bracket, the first rotating member is connected to the first sliding member, and the first 3D camera is disposed on the first rotating member; the battery pack inspection method further includes: controlling the first sliding member to move relative to the first bracket in a third direction, to drive the first 3D camera to move relative to a pin header connector on the top surface of the battery pack in the third direction, such that a distance between the first 3D camera and the pin header connector meets a preset distance threshold; and/or controlling the first rotating member to rotate relative to the first bracket around the third direction, to drive the first 3D camera to rotate relative to the pin header connector around the third direction, such that an included angle between the first 3D camera and the pin header connector meets a preset included angle threshold.

In the technical solution of the present disclosure, since the first rotating member is controlled to drive the first 3D camera to rotate relative to the pin header connector on the top surface of the battery pack, the included angle between the first 3D camera and the pin header connector can be adjusted, thereby enabling the first 3D camera to be perpendicular to the pin header connector. Additionally, the first sliding member is controlled to drive the first 3D camera to move relative to the pin header connector in the third direction, such that the distance between the first 3D camera and the pin header connector can be adjusted, thereby realizing the parallel capturing of the pin header connector by the first 3D camera, which is conducive to reducing problems such as specular reflection and depth-of-field blur appearing in the top surface image including the pin header connector, and can improve the quality of the top surface image including the pin header connector.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present disclosure. Throughout all the drawings, the same components are denoted by the same reference numerals. In the drawings:
FIG. 1 is a schematic structural diagram of a battery pack inspection apparatus according to the present disclosure;
FIG. 2 is a schematic structural diagram of a second driving mechanism and a second camera set in a battery pack inspection apparatus according to the present disclosure;
FIG. 3 is a schematic structural diagram of a battery pack according to the present disclosure;
FIG. 4 is a first schematic structural diagram of a first camera set in a battery pack inspection apparatus according to the present disclosure;
FIG. 5 is a second schematic structural diagram of a first camera set in a battery pack inspection apparatus according to the present disclosure;
FIG. 6 is a first schematic structural diagram of a second camera set in a battery pack inspection apparatus according to the present disclosure;
FIG. 7 is a second schematic structural diagram of a second camera set in a battery pack inspection apparatus according to the present disclosure;
FIG. 8 is a schematic structural diagram of a positioning device in a battery pack inspection apparatus according to the present disclosure; and
FIG. 9 is a schematic flowchart of a method of using a battery pack inspection apparatus according to the present disclosure.

### Description of the reference numerals:

1-gantry truss; 11-second frame body; 111-second support beam; 12-first frame body; 121-first support beam; 2-first camera set; 21-first bracket; 211-first top plate; 212-first side plate; 213-first accommodating cavity; 22-first 3D scanning camera; 23-first 2D line scan camera; 24-first 2D camera; 25-first 3D camera; 26-first bar light source; 261-first light source mounting bracket; 27-second bar light source; 271-second light source mounting bracket; 28-first annular light source; 291-first rotating member; 292-first sliding member; 3-second camera set; 31-second bracket; 32-second 2D camera; 33-second 3D camera; 34-third 2D camera; 35-second 3D scanning camera; 36-second 2D line scan camera; 371-third bar light source; 372-second annular light source; 373-fourth bar light source; 374-fifth bar light source; 375-camera fixing bracket; 376-third light source mounting bracket; 377-fourth light source mounting bracket; 378-fifth light source mounting bracket; 38-second rotating member; 39-second sliding member; 4-first driving mechanism; 41-fifth linear module; 42-first linear module; 43-third linear module; 44-third rotating member; 5-second driving mechanism; 51-sixth linear module; 52-second linear module; 53-fourth linear module; 54-fourth rotating member; 6-positioning device; 61-positioning base; 62-lifting mechanism; 621-lifting drive member; 622-lifting transmission member; 623-lifting beam; 63-positioning mechanism; 631-transport positioning assembly; 6311-transport positioning drive member; 6312-transport positioning member; 632-tray positioning assembly; 6321-tray positioning drive member; 6322-tray positioning member; 64-guiding assembly; 641-guide frame; 642-guide wheel; 7-battery pack; 71-top surface; 72-side surface; 73-end surface; 81-top surface acquisition point; 82-preset top surface path; 83-side surface acquisition point; 84-preset side surface path; 85-end surface acquisition point; 86-preset end surface path; X-first direction; Y-second direction; Z-third direction.

### DETAILED DESCRIPTION

The following describes in detail embodiments of technical solutions of the present disclosure with reference to the drawings. The following embodiments are merely used to more clearly illustrate the technical solutions of the present disclosure, and therefore, are only exemplary and do not limit the protection scope of the present disclosure.

Unless otherwise defined, all technical and scientific terms used herein have the same meaning as commonly understood by those skilled in the art to which the present disclosure relates. The terms used herein are intended to merely describe the specific embodiments, rather than to limit the present disclosure. The terms "include", "comprise", "have", and "provided with", and any other variations thereof in this specification and the description of the drawings of the present disclosure are intended to cover non-exclusive inclusions.

In the description of the embodiments of the present disclosure, the technical terms "first", "second", "third", and the like are merely intended to distinguish different objects and should not be understood as any indication or implication of relative importance or any implicit indication of the number, specific sequence, or primary-secondary relationship of the technical features indicated. In the description of the embodiments of the present disclosure, unless otherwise specifically defined, "plurality of" means two or more.

Reference in the present disclosure to "embodiment" means that a particular feature, structure, or characteristic described in combination with the embodiment can be included in at least one embodiment of the present disclosure. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present disclosure, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present disclosure, the technical terms "length", "width", "thickness", "upper", "lower", "front", "rear", "left", "right", "vertical", "horizontal", "top", "bottom", "inner", "outer", "circumferential", and the like indicate orientations or positional relationships based on those shown in the drawings. They are merely for the convenience of describing the embodiments of the present disclosure and simplifying the description, rather than indicating or implying that the device or element referred to must have a specific orientation or be constructed, operated, or used in the specific orientation, and thus should not be construed as a limitation to the embodiments of the present disclosure.

In the description of the embodiments of the present disclosure, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present disclosure can be interpreted according to specific conditions.

In the description of the embodiments of the present disclosure, unless otherwise clearly specified and defined, the technical term "contact" should be interpreted in a broad sense. For example, the "contact" may be direct contact, or contact through an intermediate medium layer, or contact without an interaction force between two contacting elements, or contact with an interaction force between two contacting elements.

At present, new energy batteries are increasingly applied in life and industry. New energy batteries are not only applied in energy storage power systems such as hydropower, thermal power, wind power, and solar power stations, but are also widely applied in electric transportation vehicles such as electric bicycles, electric motorcycles, and electric vehicles, as well as in aerospace and other fields. With the continuous expansion of the application field of power batteries, the market demand for power batteries is also constantly increasing.

With the development of technology, the requirements for appearance quality control of batteries are gradually increasing, and the monitoring of appearance defects on the large surfaces of battery housings and on the components on the large surfaces is becoming increasingly precise. In the related art, methods for appearance inspection of batteries include manual judgment and retrospective review of camera-stored photographs. The manual judgment method involves manual observation of the appearance of the battery to determine whether a defect exists in the appearance of the battery. The retrospective review of camera-stored photographs involves personnel viewing acquired images of the battery and manually determining whether the battery in the images has defects. However, neither the manual judgment method nor the method of retrospective review of camera-stored photographs can accurately and efficiently inspect the appearance of the battery. The method of retrospective review of camera-stored photographs has problems such as missed inspections caused by improper viewing of images due to human factors, while manual judgment suffers from low inspection efficiency and poor inspection consistency caused by personnel fatigue and the like. Therefore, there is a need for a battery pack inspection apparatus, where the battery pack inspection apparatus can not only improve the accuracy of battery appearance inspection, but also improve the efficiency of battery appearance inspection.

The embodiments of the present disclosure provide a battery pack inspection apparatus. The battery involved in the embodiments of the present disclosure may include one or more battery cell assemblies for providing voltage and capacity. The battery cell assembly may include a plurality of battery cells connected in series, in parallel, or in series-parallel by a busbar component.

In some embodiments, the battery cell assembly is generally formed by arranging a plurality of battery cells. As an example, the battery cell assembly may be a battery module, and the battery module is formed as an independent module by arranging and fixing a plurality of battery cells. As an example, the battery module may be formed by bundling the plurality of battery cells with cable ties.

Illustratively, the battery may be a battery pack; the battery pack includes a case and one or more battery cell assemblies, and the battery cell assemblies are accommodated in the case. The battery may also refer to an energy storage device; the energy storage device includes a case, and at least one side of the case is provided with a door. The energy storage device includes an energy storage container, an energy storage electrical cabinet, and the like. The specific forms and types of the battery are not limited in the embodiments of the present disclosure.

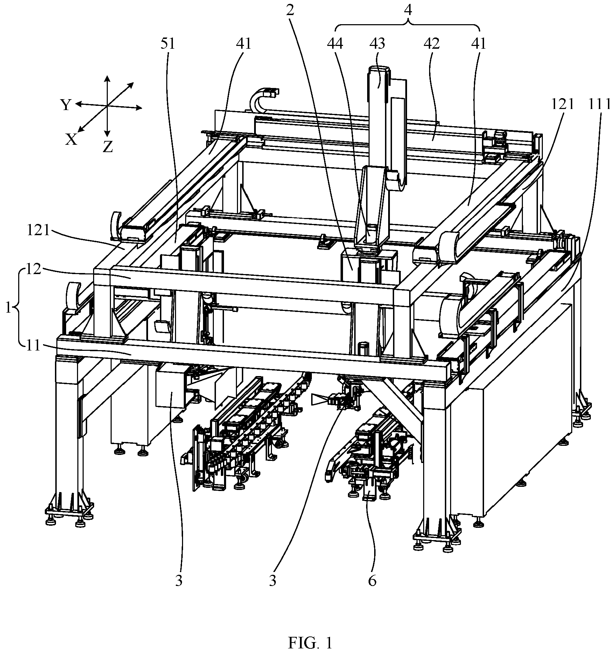

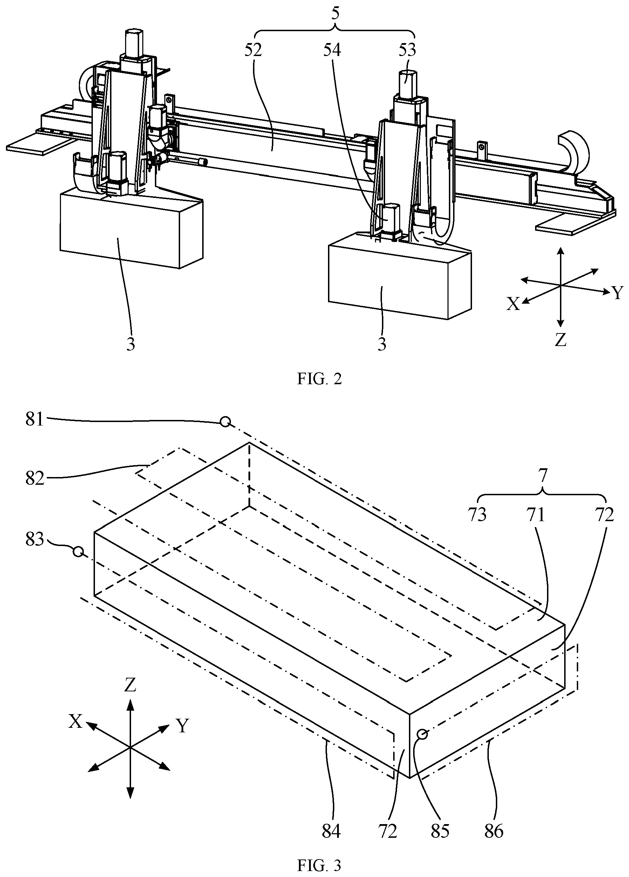

Referring to FIGS. 1 and 2, FIG. 1 illustrates a schematic structural diagram of a battery pack inspection apparatus according to the present disclosure, and FIG. 2 is a schematic structural diagram of a second driving mechanism and a second camera set in the battery pack inspection apparatus according to the present disclosure. The battery pack 7 inspection apparatus includes: a gantry truss 1, a first camera set 2, a second camera set 3, and a processor. The gantry truss 1 includes a first frame body 12 and a second frame body 11. The first frame body 12 includes two first support beams 121 provided to extend in a first direction X, and a first linear module 42 is slidably disposed on the two first support beams 121 in the first direction X; the second frame body 11 includes two second support beams 111 provided to extend in the first direction X, and a second linear module 52 is slidably disposed on the two second support beams 111 in the first direction X. The first camera set 2 is slidably disposed on the first linear module 42 in a second direction Y, and is configured to capture a top surface image of the battery pack 7; the second direction Y is perpendicular to the first aspect. Two oppositely disposed second camera sets 3 are each slidably disposed on the second linear module 52 in the second direction Y, and the second camera sets 3 are rotatably connected to the second linear module 52 around a third direction Z; the second camera sets 3 are configured to capture a side surface image and an end surface image of the battery pack 7. The third direction Z is perpendicular to the first direction X, and the third direction Z is perpendicular to the second direction Y. The processor is configured to receive the top surface image, the side surface image, and the end surface image, and inspect the appearance of the battery pack 7 based on the top surface image, the side surface image, and the end surface image.

In the embodiments of the present disclosure, as shown in FIG. 1, the gantry truss 1 is configured to provide mounting points and support for other components in the battery pack 7 inspection apparatus, and the battery pack 7 inspection apparatus may be mounted at a predetermined station by means of the gantry truss 1. For example, the gantry truss 1 may be configured as a frame structure; that is, a plurality of rod-shaped members may be used, and the plurality of rod-shaped members may be fixedly connected end-to-end with each other to form the required gantry truss 1.

Illustratively, the gantry truss 1 includes a first frame body 12 and a second frame body 11. The second frame body 11 may include four lower columns and two second support beams 111. The four lower columns extend in a third direction Z (a direction parallel to or approximately parallel to the direction of gravity), and the two second support beams 111 extend in a horizontal plane. The two second support beams 111 may be disposed parallel to each other, and the two second support beams 111 may extend in a first direction X. The two second support beams 111 may also be connected by two connecting beams extending in a second direction Y, to form a rectangular frame. Connecting the four lower columns respectively to both ends of the two second support beams 111 can form the second frame body 11. The four lower columns may be fixed to the station (e.g., the ground). The first direction X may be the movement direction of the battery pack 7 during the process of transporting the battery pack 7 into the battery pack 7 inspection apparatus. The first direction X is perpendicular to or approximately perpendicular to the third direction Z, the second direction Y is perpendicular to or approximately perpendicular to the first direction X, and the second direction Y is perpendicular to or approximately perpendicular to the third direction Z.

In another example, the first frame body 12 may include four upper columns and two first support beams 121. The four upper columns extend in the third direction Z. The two first support beams 121 may be disposed parallel to each other, and the two first support beams 121 may extend in the first direction X. The two first support beams 121 may also be connected by two connecting beams extending in the second direction Y, to form a rectangular frame. Connecting one end of each of the four upper columns respectively to both ends of the two first support beams 121, and fixing the other end of each of the four upper columns to the connecting beams in the second frame body 11 can form the first frame body 12. In this way, in the third direction Z, the first frame body 12 is located above the second frame body 11; that is, the first support beams 121 are located on a side, away from the ground, of the second support beams 111.

In the embodiments of the present disclosure, as shown in FIG. 1, a first driving mechanism 4 may be provided in the battery pack 7 inspection apparatus, and the first driving mechanism 4 includes a fifth linear module 41 and a first linear module 42. The fifth linear module 41 is disposed on the first support beam 121 in the first direction X, and the first linear module 42 is disposed on the fifth linear module 41 in the second direction Y.

Illustratively, the fifth linear module 41 may be configured in a structural form including a fifth driving member and a fifth guide assembly. The fifth driving member may employ a motor, a hydraulic cylinder, a pneumatic cylinder, a servo motor, or the like. The fifth guide assembly may employ a matched fifth guide rail and fifth slider, or the like. Two fifth guide rails may be provided to extend in the first direction X, and the two fifth guide rails may be fixed in parallel to the two first support beams 121 of the first frame body 12. The fifth slider is slidably disposed on the fifth guide rail. The fifth driving member is mounted on the fifth guide rail or the gantry truss 1, and an output member of the fifth driving member is drivingly connected to the fifth slider. For example, an output shaft of the servo motor is connected to the fifth slider by a belt or a chain, or an output member of the hydraulic cylinder, the pneumatic cylinder, or the like is connected to the fifth slider. The fifth linear module 41 may also employ a fifth linear motor. In this way, the fifth linear module 41 can move in the first direction X.

In another example, the first linear module 42 may also be configured in a structural form including a first driving member and a first guide assembly. The first driving member may employ a motor, a hydraulic cylinder, a pneumatic cylinder, a servo motor, or the like. The first guide assembly may employ a matched first guide rail and first slider, or the like. The first guide rail may extend in the second direction Y, and the first guide rail is fixed to two fifth sliders in the fifth linear module 41. The first slider is slidably disposed on the first guide rail. The first driving member is fixed to the first guide rail, and an output member of the first driving member is drivingly connected to the first slider. For example, an output shaft of the servo motor is connected to the first slider by a belt or a chain, or an output member of the hydraulic cylinder, the pneumatic cylinder, or the like is connected to the first slider. The first linear module 42 may also employ a first linear motor, with two ends of the first linear motor being fixed to the two fifth sliders in the fifth linear module 41, respectively. In this way, the fifth linear module 41 is capable of driving the first linear module 42 to move in the first direction X, while the first linear module 42 itself is capable of moving in the second direction Y. That is, the first linear module 42 may be slidably disposed on the first support beam 121 in the first direction X.

In the embodiments of the present disclosure, as shown in FIGS. 1 and 2, a second driving mechanism 5 may be provided in the battery pack 7 inspection apparatus, and the second driving mechanism 5 includes a sixth linear module 51 and a second linear module 52. The sixth linear module 51 is disposed on the second support beam 111 in the first direction X, and the second linear module 52 is disposed on the sixth linear module 51 in the second direction Y.

Illustratively, the sixth linear module 51 may be configured in a structural form including a sixth driving member and a sixth guide assembly. The sixth driving member may employ a motor, a hydraulic cylinder, a pneumatic cylinder, a servo motor, or the like. The sixth guide assembly may employ a matched sixth guide rail and sixth slider, or the like. Two sixth guide rails may be provided to extend in the first direction X, and the two sixth guide rails may be fixed in parallel to the two second support beams 111 of the second frame body 11. The sixth slider is slidably disposed on the sixth guide rail. The sixth driving member is mounted on the sixth guide rail or the gantry truss 1, and an output member of the sixth driving member is drivingly connected to the sixth slider. For example, an output shaft of the servo motor is connected to the sixth slider by a belt or a chain, or an output member of the hydraulic cylinder, the pneumatic cylinder, or the like is connected to the sixth slider. The sixth linear module 51 may also employ a sixth linear motor. In this way, the sixth linear module 51 can move in the first direction X.

In another example, the second linear module 52 may be configured in a structural form including a second driving member and a second guide assembly. The second driving member may employ a motor, a hydraulic cylinder, a pneumatic cylinder, a servo motor, or the like. The second guide assembly may employ a matched second guide rail and second slider, or the like. The second guide rail may extend in the second direction Y, and the second guide rail is fixed to two sixth sliders in the sixth linear module 51. The second slider is slidably disposed on the second guide rail. The second driving member is fixed to the second guide rail, and an output member of the second driving member is drivingly connected to the second slider. For example, an output shaft of the servo motor is connected to the second slider by a belt or a chain, or an output member of the hydraulic cylinder, the pneumatic cylinder, or the like is connected to the second slider. The second linear module 52 may also employ a second linear motor, with two ends of the second linear motor being fixed to the two sixth sliders in the sixth linear module 51, respectively. In this way, the sixth linear module 51 is capable of driving the second linear module 52 to move in the first direction X, while the second linear module 52 itself is capable of moving in the second direction Y. That is, the second linear module 52 may be slidably disposed on the second support beam 111 in the first direction X.

In the embodiments of the present disclosure, referring to FIG. 3, FIG. 3 illustrates a schematic structural diagram of a battery pack 7 according to the present disclosure. The battery pack 7 generally has an approximately cuboid structural shape, and the thickness of the battery pack 7 is relatively small, while the length and the width of the battery pack are both greater than the thickness, such that the top surface 71 (the surface away from the ground in a third direction Z) and the bottom surface (the surface close to the ground in the third direction Z) of the battery pack 7 generally have larger surface areas. The bottom surface of the battery often needs to be connected to structural members of an electric apparatus that mount and support the battery pack 7. The bottom surface of the battery pack 7 is generally provided with no components or provided with a smaller number of components. The side portions are a plurality of outer surfaces of the battery pack 7 surrounding the battery pack 7 around the third direction Z. For example, in the case that the battery is in an approximately cuboid form, the battery pack 7 is provided with at least two side surfaces 72 and two end surfaces 73. For example, the side surfaces 72 may be surfaces of the side portions extending in a length direction (a first direction X) of the battery pack 7, and the end surfaces 73 may be surfaces of the side portions extending in a width direction (a second direction Y) of the battery pack 7. The top surface 71, the side surfaces 72, and the end surfaces 73 of the battery are generally all provided with some components, such as connectors. The battery pack 7 may be placed inside the gantry truss 1, such that the bottom surface of the battery faces the ground. Thus, a first camera set 2 and a second camera set 3, for acquiring images of the top surface 71, the side surfaces 72, and the end surfaces 73 of the battery pack 7, may be disposed in the battery pack 7 inspection apparatus.

In the embodiments of the present disclosure, the first camera set 2 may include a plurality of cameras, such as a 3D camera, a 2D camera, and a line scan camera. The plurality of cameras in the first camera set 2 may be disposed on the first linear module 42 in a sliding connection manner. For example, the first camera set 2 is connected to a part on the first linear module 42 that can move in the second direction Y. In this way, the top surface 71 of the battery pack 7 can be captured by the plurality of cameras in the first camera set 2, and the first camera set 2 can be driven by the first linear module 42 to move relative to the top surface 71 of the battery pack 7 in the first direction X and the second direction Y, so as to acquire the top surface images of various areas of the top surface 71 by the first camera set 2.

In the embodiments of the present disclosure, the second camera set 3 may include a plurality of cameras, such as an on-the-fly camera, a 3D camera, a 2D camera, and a line scan camera. The plurality of cameras in the second camera set 3 may be disposed on the second linear module 52 in a sliding connection manner. For example, the second camera set 3 is connected to a part on the second linear module 52 that can move in the second direction Y.

Illustratively, as shown in FIG. 1, two second camera sets 3 may be slidably disposed on the second linear module 52. That is, the second linear module 52 may be configured as a structure including two linear motors, and the two second camera sets 3 may be disposed on the two linear motors, respectively. In this way, each linear motor is capable of driving one second camera set 3 to move in the second direction Y.

In another example, the second camera set 3 may be rotatably connected to the second linear module 52 around the third direction Z; for example, the second camera set 3 is rotatably connected to an output member of a linear motor via a rotating shaft or the like. Thus, the second camera set 3 can rotate to face the side surface 72 of the battery pack 7, or the second camera set 3 can rotate to face the end surface 73 of the battery pack 7. In this way, the second camera set 3 can be driven by the second linear module 52 to move relative to the side surface 72 and the end surface 73 of the battery pack 7 in the first direction X and the second direction Y, so as to acquire the side surface images of various areas of the side surface 72 and acquire the end surface images of various areas of the end surface 73 by the second camera set 3.

In the embodiments of the present disclosure, the processor refers to a unit having a computing function; for example, a computer, a server, or the like having a processor may be used. The cameras in the first camera set 2 and the second camera set 3 may all be electrically connected to the processor, for example, being electrically connected via a cable or a wireless network. In this way, the cameras in the first camera set 2 and the second camera set 3 can be configured to upload the acquired top surface images, side surface images, and end surface images to the processor. Additionally, the processor may be configured to determine whether a defect exists in each received image based on a preset determination method or the like, so as to determine whether an appearance defect exists in the corresponding battery pack 7, thereby completing an appearance inspection of the battery pack 7.

Illustratively, a plurality of standard images of the battery pack 7 may be stored in a memory electrically connected to the processor, such as a standard top surface image of the top surface 71 of the battery pack 7, a standard side surface image of each side surface 72 of the battery pack 7, and a standard end surface image of each end surface 73 of the battery pack 7. The processor can compare the received top surface image with the standard top surface image to determine whether a defect exists in the top surface image; the processor can also compare the received side surface image with the standard side surface image to determine whether a defect exists in the side surface image; the processor can further compare the received end surface image with the standard end surface image to determine whether a defect exists in the end surface image. For example, whether a scratch exists in the top surface image, the side surface image, or the end surface image can be determined, or whether mounting positions or postures of some components externally mounted on the battery pack 7 are accurate or the like can be determined, thereby determining whether a defect exists in the battery pack 7.

In the battery pack 7 inspection apparatus according to the embodiments of the present disclosure, since the gantry truss 1 includes the first frame body 12 and the second frame body 11, the first camera set 2 may be slidably disposed on the first support beam 121 of the first frame body 12 via the first linear module 42, and the top surface image of the top surface 71 of the battery pack 7 can be acquired by the first camera set 2. Additionally, the first camera set 2 is slidably disposed on the first linear module 42, such that the first camera set 2 can be driven by the first linear module 42 to move relative to the top surface 71 of the battery pack 7, thereby facilitating the acquisition of the top surface images of various areas of the top surface 71 by the first camera set 2. Alternatively, the two second camera sets 3 may be slidably disposed on the second support beam 111 of the second frame body 11 via the second linear module 52, and the two second camera sets 3 may be slidably disposed on the second linear module 52. The second camera sets 3 are also rotatably connected to the second linear module 52; the second camera sets 3 can be driven by the second linear module 52 to move relative to the side surface 72 or the end surface 73 of the battery pack 7, and the second camera sets 3 can be rotated to face the side surface 72 or the end surface 73, thereby facilitating the acquisition, by the second camera sets 3, of the side surface images of various areas of the side surface 72 and the end surface images of various areas of the end surface 73. Furthermore, the first camera set 2 and the second camera set 3 are disposed on the first frame body 12 and the second frame body 11, respectively, such that the first camera set 2 and the second camera set 3 can move independently, which is conducive to reducing the mutual interference between the first camera set 2 and the second camera set 3 during movement, thereby improving the image acquisition efficiency for the battery pack 7. Additionally, the processor can receive the top surface image, the side surface image, and the end surface image, and the processor can be utilized to identify and inspect the top surface image, the side surface image, and the end surface image to determine whether a defect exists in the images, thereby improving the accuracy and inspection efficiency of the appearance inspection for the battery pack 7.

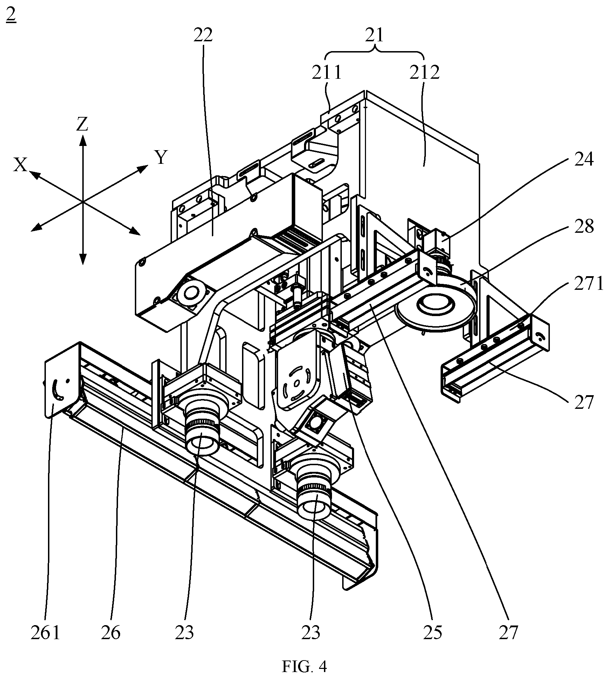

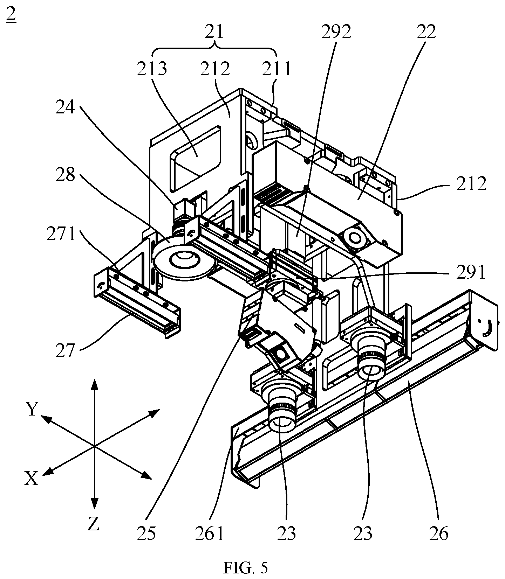

In some possible embodiments of the present disclosure, referring to FIGS. 4 and 5, FIG. 4 is a first schematic structural diagram of a first camera set 2 in the battery pack 7 inspection apparatus according to the present disclosure, and FIG. 5 is a second schematic structural diagram of the first camera set 2 in the battery pack 7 inspection apparatus according to the present disclosure. The first camera set 2 includes a first 3D scanning camera 22 and a first bracket 21 provided with a first accommodating cavity 213. The first bracket 21 includes a first top plate 211 and two first side plates 212. Upper ends of the two first side plates 212 are fixed to two ends of the first top plate 211, respectively. The first top plate 211 and the two first side plates 212 define the first accommodating cavity 213. A first opening of the first accommodating cavity 213 faces the top surface 71 of the battery pack 7 in a third direction Z. The first bracket 21 is slidably disposed on the first linear module 42 via the first top plate 211 or the first side plates 212. The first 3D scanning camera 22 is fixed to the first top plate 211 and is located outside the first accommodating cavity 213, and the first 3D scanning camera is configured to capture a 3D top surface image of the battery pack 7.

In the embodiments of the present disclosure, as shown in FIGS. 4 and 5, the first bracket 21 may be disposed in the first camera set 2, such that the first bracket 21 is utilized to arrange a plurality of cameras and other components in the first camera set 2.

Illustratively, the first bracket 21 may be configured as an approximately cuboid frame structure, and a cavity may be formed within the first bracket 21, with the cavity serving as the first accommodating cavity 213. For example, in the third direction Z, the first opening of the first accommodating cavity 213 of the first bracket 21 faces the ground; that is, after the first bracket 21 is connected to the first linear module 42, the first opening of the first accommodating cavity 213 faces the top surface 71 of the battery pack 7 in the third direction Z.

In another example, the first bracket 21 includes a first top plate 211 and two first side plates 212. The first top plate 211 is a flat plate, and the first top plate 211 is perpendicular to the third direction Z; that is, the first top plate 211 extends in a horizontal plane. The two first side plates 212 may also be flat plates, and both the two first side plates 212 extend in the third direction Z. For example, upper ends of the two first side plates 212 may be fixed to two opposite ends of the first top plate 211, respectively, such that an approximately "n-shaped" first bracket 21 can be formed, and the first opening of the first bracket 21 faces the top surface 71 of the battery pack 7.

In the embodiments of the present disclosure, as shown in FIGS. 4 and 5, the first 3D scanning camera 22 may be provided on the first bracket 21. For example, the first 3D scanning camera 22 may be fixed to the first top plate 211 by bolts. For example, the first 3D scanning camera 22 is fixed to a side, facing the top surface 71 of the battery pack 7, of the first top plate 211, and the first 3D scanning camera 22 may be located outside the first accommodating cavity 213. In this case, the lens of the first 3D scanning camera 22 faces the first opening. Thus, the 3D top surface image, which can characterize the height information of various portions of the top surface 71 of the battery, can be acquired by the first 3D scanning camera 22.

In the above embodiments, since the first bracket 21 includes the first top plate 211 and the two first side plates 212, the first accommodating cavity 213 can be defined by the first top plate 211 and the two first side plates 212, and a plurality of mounting points can be provided for the plurality of cameras in the first camera set 2 by the first top plate 211 and the two first side plates 212. Additionally, the first 3D scanning camera 22 is fixed to the first top plate 211, and the first 3D scanning camera 22 is located outside the first accommodating cavity 213, such that the first 3D scanning camera 22 can be utilized to acquire the 3D top surface image of the battery pack 7, thereby allowing the depth information of the top surface of the battery pack to be obtained based on the 3D top surface image. In addition, the occlusion of the capturing area of the first 3 scanning camera caused by the first side plates 212 can be reduced.

In some possible embodiments of the present disclosure, as shown in FIGS. 4 and 5, the first camera set 2 further includes a first 2D line scan camera 23. The first 2D line scan camera 23 is fixed to one of the first side plates 212 and is located outside the first accommodating cavity 213, staggered from a fixing position of the first 3D scanning camera 22. The first 2D line scan camera faces a top surface 71 of the battery and is configured to capture a first line scan image of the top surface 71.

In the embodiments of the present disclosure, the first 2D line scan camera 23 may also be disposed in the first camera set 2, and the first 2D line scan camera 23 may be fixed to the first bracket 21. For example, the first 2D line scan camera 23 may be fixed to an end, away from the first top plate 211, of one of the first side plates 212, and the first 2D line scan camera 23 may be located in an area outside the first accommodating cavity 213 and close to the first opening. Additionally, the first 2D line scan camera 23 is arranged to avoid the acquisition path of the first 3D scanning camera 22. That is, the first 2D line scan camera 23 and the first 3D scanning camera 22 are fixed to the first bracket 21 while being staggered from each other by a certain distance, so as to reduce the occlusion of the first 3D scanning camera 22 caused by the first 2D line scan camera 23. If the first 2D line scan camera 23 employs a 2D color line scan camera, a clear first line scan image of the top surface 71 of the battery pack 7 can be acquired by the first 2D line scan camera 23 during the movement of the first camera set 2.

Illustratively, two first 2D line scan cameras 23 may be fixed to one of the first side plates 212, and the two first 2D line scan cameras 23 are fixed to the first side plate 212 in a width direction of the first side plate 212. In the third direction Z, the first 2D line scan camera 23 faces the top surface 71 of the battery pack 7. For example, the first 2D line scan camera 23 is fixed to the first side plate 212 by means of screws, adhesive, or the like.

In the above embodiments, since the first camera set 2 further includes the first 2D line scan camera 23, the area of the top surface 71 of the battery pack 7 can be captured by the first 2D line scan camera 23, so as to facilitate the acquisition of the first line scan image containing the overall planar information of the top surface 71 of the battery pack 7, thereby obtaining the 2D image information of the top surface. Such a configuration facilitates the combination of the 2D line scan image of the top surface with the 3D image of the top surface to obtain more comprehensive information of the top surface image. Additionally, the first 2D line scan camera 23 is located outside the first accommodating cavity 213 and is disposed on the first bracket 21 in a staggered manner with the first 3D scanning camera 22, such that the occlusion of the first 3D scanning camera 22 caused by the first 2D line scan camera 23 can be reduced.

In some possible embodiments of the present disclosure, the first camera set 2 further includes a first bar light source 26. The first bar light source 26 is rotatably disposed on an outer wall of the first side plate 212, an illumination area of the first bar light source 26 covers a capturing area of the first 2D line scan camera 23 on the top surface 71, and the first bar light source is configured to illuminate the top surface 71.

In the embodiments of the present disclosure, corresponding fill lights may be respectively provided for the plurality of cameras in the first camera set 2, to illuminate the capturing areas of the corresponding cameras using the fill lights, thereby enabling the capturing areas to have uniform brightness and the like.

Illustratively, the first bar light source 26 may be disposed on the outer wall of the first side plate 212 on which the first 2D line scan camera 23 is mounted, such that the first bar light source 26 is adjacent to the first 2D line scan camera 23. Additionally, an extension direction of the first bar light source 26 is parallel to a length direction of the capturing areas of the two first 2D line scan cameras 23. That is, the extension direction of the first bar light source 26 is parallel to the arrangement direction of the two first 2D line scan cameras 23. Thus, the illumination area of the first bar light source 26 can cover the capturing area of the first 2D line scan camera 23 on the top of the battery pack 7, thereby enabling the capturing area of the first 2D line scan camera 23 on the top surface 71 of the battery pack 7 to have uniform brightness, and reducing the influence of reflected light or the like on the first 2D line scan camera 23. For example, the first bar light source 26 may employ a light-emitting diode (LED) light or the like.

In another example, a first light source mounting bracket 261 matching the first bar light source 26 may be adopted. The first light source mounting bracket 261 is fixed to the outer wall of the first side plate 212 by bolts, and two ends of the first bar light source 26 are rotatably connected to the first light source mounting bracket 261 via a rotating shaft. Thus, the first bar light source 26 can rotate relative to the first bracket 21, thereby facilitating the adjustment of the illumination area of the first bar light source 26 on the top surface 71 of the battery pack 7.

In the above embodiments, since the first bar light source 26 is fixed to the outer wall of the first side plate 212 on which the first 2D line scan camera 23 is mounted, the capturing area of the first 2D line scan camera 23 can be illuminated by the first bar light source 26, which is conducive to improving the quality of the first line scan image acquired by the first 2D line scan camera 23. Additionally, the occlusion of the first 3D scanning camera 22 caused by the first bar light source 26 can be reduced.

In some possible embodiments of the present disclosure, the first camera set 2 further includes a first 2D camera 24. The first 2D camera 24 is fixed to the other first side plate 212, and is located outside the first accommodating cavity 213 and on a side close to the first opening; the first 2D camera faces the top surface 71 of the battery pack 7 and is configured to capture the 2D top surface image of the top surface 71.

In the embodiments of the present disclosure, the first 2D camera 24 may be disposed in the first camera set 2. For example, the first 2D camera 24 may be fixed to the outer wall of the other first side plate 212 in the first bracket 21, thereby enabling the first 2D camera 24 to be located outside the first accommodating cavity 213. That is, the first 2D line scan camera 23 is fixed to one of the first side plates 212, and the first 2D camera 24 is fixed on the other first side plate 212. The first 2D camera 24 may be fixed to the outer wall of the first side plate 212 by means of screws, adhesive, or the like.

Illustratively, the first 2D camera 24 may be located at an end, away from the first top plate 211, of the first side plate 212, such that the first 2D camera 24 is located at a position close to the first opening, and the first 2D camera 24 is oriented to face the top surface 71 of the battery pack 7.

In the above embodiments, since the first camera set 2 further includes the first 2D camera 24, the 2D top surface image of the battery pack 7 can be acquired by the first 2D camera 24, so as to obtain the image information of components, such as labels and nameplates, on the top surface 71 of the battery pack 7, such that detailed parts, such as the components on the top surface 71 of the battery pack 7, can also be detected. Additionally, the first 2D camera 24 is fixed to the outer wall of the other first side plate 212, such that a relatively long distance can be kept between the first 2D camera 24 and the first 3D scanning camera 22, as well as between the first 2D camera and the first 2D line scan camera 23, which is conducive to reducing the mutual occlusion among the cameras.

In some possible embodiments of the present disclosure, the first camera set 2 further includes two second bar light sources 27. The second bar light sources 27 are fixed to the first side plate 212 on which the first 2D camera 24 is disposed, the second bar light sources are located outside the first accommodating cavity 213 and on the side close to the first opening, and the two second bar light sources 27 are symmetrically disposed on two sides of the first 2D camera 24. An illumination area of the second bar light sources 27 covers a capturing area of the first 2D camera 24 on the top surface 71 of the battery pack 7, and the second bar light sources are configured to illuminate the top surface 71 of the battery pack 7.

In the embodiments of the present disclosure, a corresponding fill light may be provided for the first 2D camera 24 to illuminate the capturing area of the first 2D camera 24 using the fill light, thereby enabling the capturing area to have uniform brightness and the like.

Illustratively, the second bar light source 27 may be disposed on the outer wall of the first side plate 212 on which the first 2D camera 24 is mounted, such that the second bar light source 27 is adjacent to the first 2D camera 24. For example, two second bar light sources 27 may be symmetrically disposed on two sides of the first 2D camera 24, and the two second bar light sources 27 may both be located outside the first accommodating cavity 213. An extension direction of the second bar light source 27 may be configured to be perpendicular to the plane defined by the first side plate 212. Thus, the illumination area of the second bar light source 27 can cover the capturing area of the first 2D camera 24 on the top of the battery pack 7, thereby enabling the capturing area of the first 2D camera 24 on the top surface 71 of the battery pack 7 to have uniform brightness. For example, the first bar light source 26 may employ an LED light or the like.

In another example, a second light source mounting bracket 271 matching the second bar light source 27 may be adopted. The second light source mounting bracket 271 is fixed to the outer wall of the first side plate 212 by bolts, and two ends of the second bar light source 27 are rotatably connected to the second light source mounting bracket 271 via a rotating shaft. Thus, the second bar light source 27 can rotate relative to the first bracket 21, thereby facilitating the adjustment of the illumination area of the second bar light source 27 on the top surface 71 of the battery pack 7.

In the above embodiments, since the second bar light source 27 is fixed to the outer wall of the first side plate 212 on which the first 2D camera 24 is mounted, the capturing area of the first 2D camera 24 can be illuminated by the second bar light source 27, which is conducive to improving the quality of the 2D top surface image acquired by the first 2D camera 24. Additionally, providing two second bar light sources 27 can make the brightness of the capturing area of the first 2D camera 24 more uniform.

In some possible embodiments of the present disclosure, the first camera set 2 further includes a first annular light source 28. The first annular light source 28 is fixed to the first side plate 212 on which the first 2D camera 24 is disposed, and the first annular light source is located outside the first accommodating cavity 213 and on the side close to the first opening. The first annular light source 28 is coaxially disposed with the first 2D camera 24, an illumination area of the first annular light source 28 covers a capturing area of the first 2D camera 24 on the top surface 71 of the battery pack 7, and the first annular light source is configured to illuminate the top surface 71 of the battery pack 7.

In the embodiments of the present disclosure, an annular fill light may also be provided for the first 2D camera 24. For example, a first annular light source 28 is fixed to the first side plate 212 on which the first 2D camera 24 is mounted. The first annular light source 28 has a circular ring structure. The first annular light source 28 may be coaxially disposed with the first 2D camera 24; that is, the axis of the first annular light source 28 is parallel or approximately parallel to the axis of the first 2D camera 24, and the axis of the first annular light source coincides or approximately coincides with the axis of the first 2D camera. Thus, the illumination area formed by the first annular light source 28 on the top surface 71 of the battery pack 7 can cover the capturing area of the first 2D camera 24 on the top surface 71 of the battery pack 7, such that the capturing area of the first 2D camera 24 has uniform brightness.

In the above embodiments, since the first 2D camera 24 is provided with the first annular light source 28, and the first annular light source 28 is coaxially disposed with the first 2D camera 24, the capturing area of the first 2D camera 24 on the top surface 71 of the battery pack 7 can be illuminated by the first annular light source 28, such that the capturing area of the first 2D camera 24 can become brighter, which is conducive to improving the quality of the 2D top surface image acquired by the first 2D camera 24, thereby improving the accuracy of defect determination for the top surface 71 of the battery pack 7.

In some possible embodiments of the present disclosure, the first camera set 2 further includes a first 3D camera 25; the first 3D camera 25 is movably disposed on an inner wall of the first top plate 211 and is located between the first 2D line scan camera 23 and the first 2D camera 24; the first 3D camera faces the top surface 71 of the battery pack 7 and is configured to capture an image of a pin header connector on the top surface 71 of the battery pack 7.

In the embodiments of the present disclosure, the first 3D camera 25 may also be disposed on the first bracket 21. For example, the first 3D camera 25 may be movably disposed on the inner wall of the first top plate 211, and the first 3D camera 25 is oriented to face the first opening. The three-dimensional image of a connector disposed on the top surface 71 of the battery pack 7, such as the image of a pogo pin, may be acquired by the first 3D camera 25.

Illustratively, the first 3D camera 25 may be movably disposed on the inner wall of the first top plate 211 in a mode in which the first 3D camera is capable of moving relative to the first bracket 21. For example, the first 3D camera 25 may employ a high-precision laser camera, such as an infrared laser 3D camera with a resolution of 1920*1080@20fps for depth maps and color maps.

In the above embodiments, since the first camera 2 assembly further includes the first 3D camera 25 movably disposed on the inner wall of the first top plate 211, the image of the pin header connector of a connector, such as a pogo pin, on the top surface 71 of the battery pack 7 can be captured by the first 3D camera 25, such that whether the mounting angle and the mounting position of the pin header connector are appropriate can be determined according to the image of the pin header connector.

In some possible embodiments of the present disclosure, the first camera set 2 further includes a first rotating member 291 and a first sliding member 292; the first sliding member 292 is fixed to the inner wall of the first top plate 211, the first rotating member 291 is connected to the first sliding member 292, and the first 2D camera 24 is disposed on the first rotating member 291; the first sliding member 292 is capable of driving the first rotating member 291 to move relative to the first bracket 21 in the third direction Z, and the first rotating member 291 is capable of driving the first 3D camera 25 to rotate around the third direction Z.

In the embodiments of the present disclosure, the first 3D camera 25 may be movably disposed on the inner wall of the first top plate 211 via the first rotating member 291 and the first sliding member 292. For example, the first rotating member 291 may employ a rotary cylinder, a servo motor, a stepping motor, or the like. The first sliding member 292 may employ a slide cylinder, an oil cylinder, a linear motor, or the like.

Illustratively, the first sliding member 292 may be fixed to the inner wall of the first top plate 211 in the third direction Z, the first rotating member 291 may be fixed to a piston rod of the first sliding member 292, and the first 3D camera 25 may be fixed to a rotating shaft of the first rotating member 291.

In the above embodiments, since the first 3D camera 25 is disposed on the inner wall of the first top plate 211 via the first rotating member 291 and the first sliding member 292, the first 3D camera 25 can be driven by the first sliding member 292 to move in the third direction Z, and the first 3D camera 25 can be driven by the first rotating member 291 to rotate around the third direction Z, thereby facilitating the adjustment of the distance and the included angle between the first 3D camera 25 and the pin header connector, such that the first 3D camera can comprehensively capture the images of the pin header connector from multiple angles. For example, a plurality of images of the pin header connector captured from multiple angles can be fused using image fusion techniques, such as pyramid fusion and alpha fusion, to obtain an image of the pin header connector with higher image quality, thereby improving the inspection precision of the mounting condition of the pin header connector.

In some possible embodiments of the present disclosure, the battery pack 7 inspection apparatus further includes a third rotating member 44. The first bracket 21 is connected to the first linear module 42 via the third rotating member 44, and the third rotating member 44 is configured to drive the first camera set 2 to rotate around the third direction Z.

In the embodiments of the present disclosure, as shown in FIG. 1, the first driving mechanism 4 further includes the third rotating member 44. The third rotating member 44 is connected to the first linear module 42, and the rotation axis of the third rotating member 44 is parallel to the third direction Z. The first camera set 2 is connected to the third rotating member 44 via the first bracket 21.

Illustratively, the third rotating member 44 may employ a rotation driving member and a rotating shaft. For example, the first top plate 211 in the first bracket 21 is connected to the first linear module 42 via the rotating shaft, the rotation driving member is fixed to the first linear module 42, and the rotation driving member and the rotating shaft are drivingly connected via a gear or the like. The rotation driving member may employ a servo motor or the like. The third rotating member 44 may also employ a servo motor; the servo motor is fixed to the first linear module 42, and the first top plate 211 is fixed to an output shaft of the servo motor. In this way, the first camera set 2 can be driven by the third rotating member 44 to rotate relative to the top surface 71 of the battery pack 7.

In the above embodiments, since the first camera set 2 is connected to the first linear module 42 via the third rotating member 44, the first camera set 2 can be driven by the third rotating member 44 to rotate around the third direction Z, such that the included angle between the first camera set 2 and the top surface 71 of the battery pack 7 can be adjusted. In this way, the cameras in the first camera set 2 can be oriented to face the plane in the top surface 71 of the battery pack 7 or the protruding components on the top surface 71 of the battery pack 7 at different angles, such that the capturing direction and the capturing angle of the cameras in the first camera set 2 for the protruding components can be adjusted, which is conducive to obtaining the relatively comprehensive and clear images of the protruding components on the top surface 71 of the battery pack 7, thereby further improving the accuracy of defect determination and identification for the top surface 71 of the battery pack 7.

In some possible embodiments of the present disclosure, the battery pack 7 inspection apparatus further includes a third linear module 43. The third linear module 43 is slidably disposed on the first linear module 42 in the third direction Z; the third rotating member 44 is connected to the third linear module 43, and the third linear module 43 is capable of driving the first camera set 2 to move in the third direction Z.

In the embodiments of the present disclosure, as shown in FIG. 1, the third linear module 43 may be disposed in the first driving mechanism 4, such that the first camera set 2 is driven by the third linear module 43 to move in the third direction Z.

Illustratively, the third linear module 43 may be configured in a structural form including a third driving member and a third guide assembly. The third driving member may employ a motor, a hydraulic cylinder, a pneumatic cylinder, a servo motor, or the like. The third guide assembly may employ a matched third guide rail and third slider, or the like. The third guide rail may extend in the third direction Z, and the third guide rail is fixed to the first slider in the first linear module 42. The third slider is slidably disposed on the third guide rail. The third driving member is fixed to the third guide rail, and an output member of the third driving member is drivingly connected to the third slider. For example, an output shaft of the servo motor is connected to the third slider by a belt or a chain, or an output member of the hydraulic cylinder, the pneumatic cylinder, or the like is connected to the third slider. The third linear module 43 may also employ a third linear motor, and the third linear motor is fixed to the first slider in the first linear module 42. In this way, the fifth linear module 41 is capable of driving the first linear module 42 to move in the first direction X, while the first linear module 42 is capable of driving the third linear module 43 to move in the second direction Y, and the third linear module 43 is, in turn, capable of driving the first camera set 2 to move in the third direction Z.

In the above embodiments, since the first camera set 2 is connected to the first linear module 42 via the third linear module 43, the first camera set 2 can be driven by the third linear module 43 to move in the third direction Z, such that the distance between the first camera set 2 and the top surface 71 of the battery pack 7 can be adjusted. In this way, the focal length between the cameras in the first camera set 2 and the top surface 71 of the battery pack 7 can be conveniently adjusted.

In some possible embodiments of the present disclosure, a height sensor (not shown in the figures) is provided on the third linear module 43 or the first bracket 21, and the height sensor is configured to detect the height distance between the first camera set 2 and the top surface 71 of the battery pack 7 in the third direction Z, so as to adjust the height distance.

In the embodiments of the present disclosure, in the embodiments of the present disclosure, the height sensor may be provided in the battery pack 7 inspection apparatus to detect the height distance between the top surface 71 of the battery pack 7 and the first camera set 2 by means of the height sensor, the height distance being the distance between the first camera set 2 and the top surface 71 of the battery pack 7 in the third direction Z, such that the adjustment of the focal length between the cameras in the first camera set 2 and the top surface 71 of the battery pack 7 is facilitated.

Illustratively, the height sensor may employ an optical distance sensor, an infrared distance sensor, an ultrasonic distance sensor, or the like. The height sensor may be fixed to the first bracket 21, or the height sensor may be fixed to a part on the third linear module 43 that is connected to the third rotating member 44, and the height sensor is oriented to face the top surface 71 of the battery pack 7 in the third direction Z, such that the height distance between the first camera set 2 and the top surface 71 of the battery pack 7 can be obtained by means of the height sensor.

In another example, the height sensor may be electrically connected to a controller of the battery pack 7 inspection apparatus, and the height sensor can upload the obtained height distance information to the controller in real time. The controller can, based on the difference between the height distance and a preset acquisition distance, control the third linear module 43 to drive the first camera set 2 to move relative to the top surface 71 of the battery pack 7 in the third direction Z to adjust the height distance, thereby making the height distance consistent with a preset capturing distance.

In the above embodiments, since the height sensor is provided on the third linear module 43 or the first bracket 21, the height distance information between the first camera set 2 and the top surface 71 of the battery pack 7 can be obtained in time by means of the height sensor, such that the third linear module 43 can be timely and quickly controlled to move based on the height distance, so as to adjust the distance between the first camera set 2 and the top surface 71 of the battery pack 7, and thus the height distance can be adjusted to make the height distance consistent with the preset capturing distance.

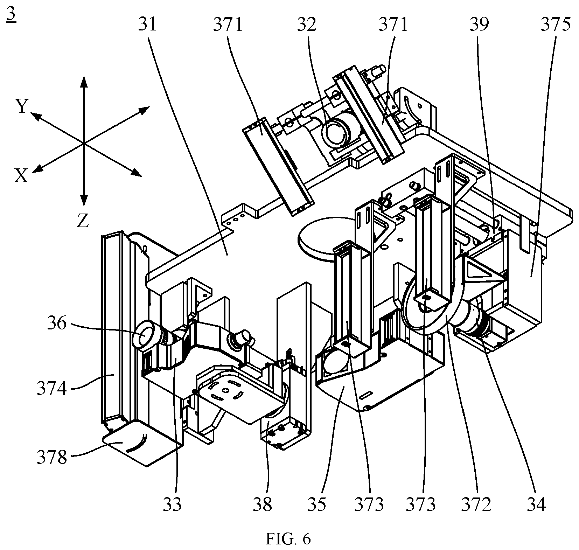

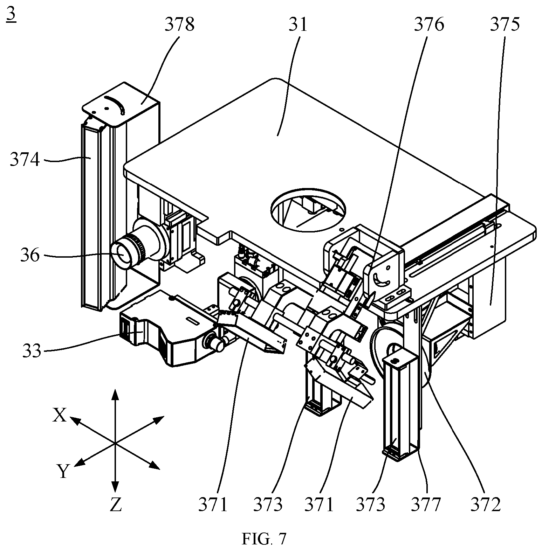

In some possible embodiments of the present disclosure, referring to FIGS. 6 and 7, FIG. 6 is a first schematic structural diagram of a second camera set 3 in the battery pack 7 inspection apparatus according to the present disclosure, and FIG. 7 is a second schematic structural diagram of the second camera set 3 in the battery pack 7 inspection apparatus according to the present disclosure. The second camera set 3 includes a second bracket 31 and a second 2D camera 32. The second bracket 31 is parallel to the plane defined by a first direction X and a second direction Y. In a third direction Z, one side of the second bracket 31 is slidably connected to the second linear module 52. The second 2D camera 32 is obliquely disposed on the second bracket 31 at a preset angle, and is located on a side, close to the second linear module 52, of the second bracket 31. The second 2D camera 32 is configured to capture the edge image of the edge between the top surface 71 and the side surface 72 of the battery pack 7 or the edge between the top surface 71 and the end surface 73 of the battery pack.

In the embodiments of the present disclosure, the second bracket 31 may be disposed in the second camera set 3, such that the second bracket 31 is utilized to fixedly mount a plurality of cameras and other components in the second camera set 3. For example, the second bracket 31 may be configured as a plate-shaped structure, and the plate-shaped second bracket 31 may extend in a horizontal plane; that is, the first bracket 21 is perpendicular or approximately perpendicular to the third direction Z.

Illustratively, in the third direction Z, one side of the second bracket 31 may be connected to the second linear module 52. For example, the second bracket 31 is connected to the slider in the second linear module 52 by bolts or the like. Thus, the second bracket 31 can be slidably connected to the second linear module 52.

In the embodiments of the present disclosure, the second 2D camera 32 may be disposed on the second bracket 31. For example, in the third direction Z, the second 2D camera 32 may be disposed on a side, close to the second linear module 52, of the second bracket 31. Additionally, the second 2D camera 32 may be obliquely disposed on the second bracket 31. For example, there may be a preset angle between the capturing direction of the second 2D camera 32 and the third direction Z, and the preset angle may be an included angle, such as 30° or 45°. In this way, the second 2D camera 32 can be made to be approximately perpendicular to the edge between the top surface 71 and the side surface 72 of the battery pack 7, or the edge between the top surface 71 and the end surface 73, such that the capturing of the edge of the battery pack 7 by the second 2D camera 32 is facilitated, thereby acquiring the clear image including the edge of the battery pack 7.

In the above embodiments, since the second bracket 31 is perpendicular to the third direction Z, the large surface area of the second bracket 31 can be utilized to provide a plurality of mounting points for a plurality of cameras in the second camera set 3. Additionally, the second 2D camera 32 is fixed to the side, close to the second linear module 52, of the second bracket 31, such that the second 2D camera 32 can be obliquely located, at a preset angle, at the edge of the second bracket 31, which not only can reduce the occlusion of the second 2D camera 32 caused by the second bracket 31, but also can reduce the occlusion of other components in the second camera set 3 caused by the second 2D camera 32. Furthermore, the clear edge image of the edge on the battery pack 7 can be acquired by the second 2D camera 32, such that whether a defect exists on the edge of the battery pack 7 can be determined according to the edge image.

In some possible embodiments of the present disclosure, the second camera set 3 further includes two third bar light sources 371. The third bar light sources 371 are obliquely disposed on the second bracket 31 at the preset angle and are symmetrically disposed on two sides of the second 2D camera 32, and the third bar light sources are configured to illuminate the edge captured by the second 2D camera 32.

In the embodiments of the present disclosure, a corresponding fill light may be provided for the second 2D camera 32 to illuminate the capturing area of the second 2D camera 32 using the fill light, thereby enabling the capturing area to have uniform brightness and the like.

Illustratively, the third bar light source 371 may be disposed on the side, close to the second linear module 52, of the second bracket 31, such that the third bar light source 371 is adjacent to the second 2D camera 32. For example, two third bar light sources 371 may be symmetrically disposed on two sides of the second 2D camera 32, and the two third bar light sources 371 are positioned at the edge of the second bracket 31 at the same inclination angle as that of the second 2D camera 32. There may be an included angle of a certain degree between an extension direction of the third bar light source 371 and the third direction Z, such that the third bar light source 371 is perpendicular to the second 2D camera 32. Thus, the illumination area of the third bar light source 371 can cover the capturing area of the second 2D camera 32 on the edge of the battery pack 7, thereby enabling the capturing area of the second 2D camera 32 on the edge of the battery pack 7 to have uniform brightness. For example, the third bar light source 371 may employ an LED light or the like.

In another example, a third light source mounting bracket 376 matching the third bar light source 371 may be adopted, and the third light source mounting bracket 376 is fixed to the surface of the second bracket 31 on a side close to the second linear module 52 by using bolts or the like. The third bar light source 371 is rotatably connected to the third light source mounting bracket 376 via a rotating shaft. Thus, the third bar light source 371 can rotate relative to the second bracket 31, thereby facilitating the adjustment of the illumination angle of the third bar light source 371 on the edge of the battery pack 7.

In the above embodiments, since the third bar light source 371 is obliquely disposed on the second bracket 31 at a preset angle, the capturing area of the second 2D camera 32 can be illuminated by the third bar light source 371, which is conducive to improving the quality of the edge image of the edge acquired by the second 2D camera 32. Additionally, providing two third bar light sources 371 can make the brightness on the edge captured by the second 2D camera 32 more uniform.

In some possible embodiments of the present disclosure, the second camera set 3 further includes a second 3D camera 33. The second 3D camera 33 is rotatably disposed on the second bracket 31 via a second rotating member 38, and is located on a side, away from the second linear module 52, of the second bracket 31. The second rotating member 38 is capable of driving the second 3D camera 33 to rotate relative to the second bracket 31 around the first direction X or the second direction Y. The second 3D camera 33 is configured to capture the image of a pin header connector on the side surface 72 or the end surface 73 of the battery pack 7.

In the embodiments of the present disclosure, the second 3D camera 33 may be disposed on the second bracket 31. For example, the second 3D camera 33 may be rotatably disposed on the side, away from the second linear module 52, of the second bracket 31, and the second 3D camera 33 is oriented to face the side surface 72 or the end surface 73 of the battery pack 7. The three-dimensional images of connectors disposed on the side surface 72 and the end surface 73 of the battery pack 7, such as the images of pogo pins, may be acquired by the second 3D camera 33.

Illustratively, the second rotating member 38 may employ a rotary cylinder, a servo motor, a stepping motor, or the like. The rotation axis of the second rotating member 38 may be parallel or approximately parallel to the first direction X or the second direction Y. One end of the second rotating member 38 is fixed to the second bracket 31, and the second 3D camera 33 is fixed to a rotating shaft of the second rotating member 38, such that the second 3D camera 33 can be driven by the second rotating member 38 to rotate around the first direction X or the second direction Y.

In the above embodiments, since the second camera set 3 further includes the second 3D camera 33, images of pin header connectors of connectors, such as pogo pins, on the side surface 72 and the end surface 73 of the battery pack 7 can be captured by the second 3D camera 33, such that whether the mounting angle and the mounting position of the pin header connectors are appropriate can be determined according to the images of the pin header connectors. Additionally, the second 3D camera 33 is disposed on the second bracket 31 via the second rotating member 38, such that the second 3D camera 33 can be driven by the second rotating member 38 to rotate around the first direction X or the second direction Y, thereby facilitating the adjustment of the included angle between the second 3D camera 33 and the pin header connector, and thus capturing a clearer image of the pin header connector.

In some possible embodiments of the present disclosure, as shown in FIGS. 6 and 7, the second camera set 3 further includes a third 2D camera 34. The third 2D camera 34 is slidably disposed on the second bracket 31 in the first direction X or the second direction Y, and is located on the side, away from the second linear module 52, of the second bracket 31. The third 2D camera 34 and the second 3D camera 33 are spaced apart from each other on the second bracket 31. The third 2D camera 34 is configured to capture the 2D side surface image or the 2D end surface image of the battery pack 7.

In the embodiments of the present disclosure, the third 2D camera 34 may be disposed in the second camera set 3. For example, the third 2D camera 34 may be disposed on the side, away from the second linear module 52, of the second bracket 31 in a sliding connection manner. Additionally, the third 2D camera 34 may slide in the first direction X or the second direction Y.

Illustratively, the third 2D camera 34 and the second 3D camera 33 may be spaced apart from each other by a certain distance on the second bracket 31; that is, the third 2D camera 34 may be located at one end of the second bracket 31, and the second 3D camera 33 may be located at the other end of the second bracket 31. Such a configuration is conducive to reducing the mutual occlusion between the third 2D camera 34 and the second 3D camera 33.

In the above embodiments, since the second camera set 3 further includes the third 2D camera 34, the 2D side surface image and the 2D end surface image of the side surface 72 and the end surface 73 of the battery pack 7 can be acquired by the third 2D camera 34, so as to obtain the image information of components, such as labels and nameplates, on the side surface 72 and the end surface 73 of the battery pack 7, such that detailed parts, such as the components on the side surface 72 and the end surface 73 of the battery pack 7, can also be detected. Additionally, the third 2D camera 34 is slidably disposed on the second bracket 31 in the first direction X or the second direction Y, thereby facilitating the adjustment of the distance between the third 2D camera 34 and the side surface 72, as well as the distance between the third 2D camera and the end surface 73 of the battery pack 7.

In some possible embodiments of the present disclosure, the second camera set 3 further includes a second sliding member 39. The second sliding member 39 is fixed to the side, away from the second linear module 52, of the second bracket 31. The third 2D camera 34 is disposed on the second sliding member 39. The second sliding member 39 is capable of driving the third 2D camera 34 to move relative to the second bracket 31 in the first direction X or the second direction Y.

In the embodiments of the present disclosure, the third 2D camera 34 may be slidably disposed on the second bracket 31 via the second sliding member 39. For example, the second sliding member 39 may employ a rodless cylinder, an oil cylinder, a linear motor, or the like. A fixed end of the second sliding member 39 is fixed to the side, away from the second linear module 52, of the second bracket 31, and a sliding end of the second sliding member 39 extends in the first direction X or the second direction Y. The third 2D camera 34 is fixed to the sliding end of the second sliding member 39 via a camera fixing bracket 375, such that the third 2D camera 34 can be driven by the second sliding member 39 to move relative to the second bracket 31 in the first direction X or the second direction Y.

In the above embodiments, since the third 2D camera 34 is disposed on the second bracket 31 via the second sliding member 39, the third 2D camera 34 can be driven by the second sliding member 39 to move relative to the second bracket 31 in the first direction X or the second direction Y.

In some possible embodiments of the present disclosure, the second camera set 3 further includes a second annular light source 372. The second annular light source 372 is fixed to the second sliding member 39, is located on a side, close to the side surface 72 or the end surface 73 of the battery pack 7, of the third 2D camera 34, and is coaxially disposed with the third 2D camera 34. The second annular light source 372 is configured to illuminate the capturing area of the third 2D camera 34 on the side surface 72 or the end surface 73 of the battery pack 7.

In the embodiments of the present disclosure, an annular fill light may be provided for the third 2D camera 34. For example, the second annular light source 372 is fixed to the second sliding member 39, and the second annular light source 372 may be fixed to the camera fixing bracket 375. The second annular light source 372 has a circular ring structure, and the second annular light source 372 may be coaxially disposed with the third 2D camera 34; that is, the axis of the second annular light source 372 is parallel or approximately parallel to the axis of the third 2D camera 34, and the axis of the second annular light source coincides or approximately coincides with the axis of the third 2D camera. Thus, the illumination area formed by the second annular light source 372 on the side surface 72 and the end surface 73 of the battery pack 7 can cover the capturing area of the third 2D camera 34 on the side surface 72 and the end surface 73 of the battery pack 7, such that the capturing area of the third 2D camera 34 has uniform brightness.

In the above embodiments, since the third 2D camera 34 is provided with the second annular light source 372, and the second annular light source 372 is coaxially disposed with the third 2D camera 34, the capturing area of the third 2D camera 34 on the side surface 72 and the end surface 73 of the battery pack 7 can be illuminated by the second annular light source 372, such that the capturing area of the third 2D camera 34 can have uniform brightness, which is conducive to improving the quality of the 2D side surface image and the 2D end surface image acquired by the third 2D camera 34, thereby improving the accuracy of defect determination for the side surface 72 and the end surface 73 of the battery pack 7.

In some possible embodiments of the present disclosure, the second camera set 3 further includes two fourth bar light sources 373. The fourth bar light sources 373 are fixed to the side, away from the second linear module 52, of the second bracket 31, and are located on the side, close to the side surface 72 or the end surface 73 of the battery pack 7, of the third 2D camera 34. The two fourth bar light sources 373 are symmetrically disposed on two sides of the third 2D camera 34. An illumination area of the fourth bar light sources 373 covers a capturing area of the third 2D camera 34 on the side surface 72 or the end surface 73 of the battery pack 7, and the fourth bar light sources are configured to illuminate the capturing area of the third 2D camera 34.

In the embodiments of the present disclosure, a corresponding bar-shaped fill light may also be provided for the third 2D camera 34, to illuminate the capturing area of the third 2D camera 34 using the bar-shaped fill light, thereby enabling the capturing area to have uniform brightness and the like.

Illustratively, the fourth bar light source 373 may be disposed on the side, away from the second linear module 52, of the second bracket 31, such that the fourth bar light source 373 is adjacent to the third 2D camera 34. For example, two fourth bar light sources 373 may be symmetrically disposed on two sides of the third 2D camera 34, and the two fourth bar light sources 373 are both closer to the battery pack 7 than the third 2D camera 34. An extension direction of the fourth bar light source 373 may be parallel to the third direction Z. Thus, the illumination area of the fourth bar light source 373 can cover the capturing area of the third 2D camera 34 on the side surface 72 and the end surface 73 of the battery pack 7, thereby enabling the capturing area of the third 2D camera 34 on the side surface 72 and the end surface 73 of the battery pack 7 to have uniform brightness. For example, the fourth bar light source 373 may employ an LED light or the like.

In another example, a fourth light source mounting bracket 377 matching the fourth bar light source 373 may be adopted. The fourth light source mounting bracket 377 is fixed to the second bracket 31 by bolts, and two ends of the fourth bar light source 373 are rotatably connected to the fourth light source mounting bracket 377 via a rotating shaft. Thus, the fourth bar light source 373 can rotate relative to the second bracket 31, thereby facilitating the adjustment of the illumination area of the fourth bar light source 373 on the side surface 72 or the end surface 73 of the battery pack 7.

In the above embodiments, since the two fourth bar light sources 373 are symmetrically disposed on the two sides of the third 2D camera 34, the capturing area of the third 2D camera 34 can be illuminated by the fourth bar light sources 373, which is conducive to improving the quality of the 2D side surface image and the 2D end surface image acquired by the third 2D camera 34. Additionally, providing two fourth bar light sources 373 can make the brightness of the capturing area of the third 2D camera 34 more uniform.

In some possible embodiments of the present disclosure, the second camera set 3 further includes a second 3D scanning camera 35. The second 3D scanning camera 35 is fixed to the side, away from the second linear module 52, of the second bracket 31, and is located between the second 3D camera 33 and the third 2D camera 34; the second 3D scanning camera is configured to capture a 3D side surface image or a 3D end surface image of the battery pack 7.

In the embodiments of the present disclosure, as shown in FIG. 6, the second 3D scanning camera 35 may be disposed on the second bracket 31. For example, the second 3D scanning camera 35 may be fixed by bolts to the side, away from the second linear module 52, of the second bracket 31, and the second 3D scanning camera 35 may be located at a position on the second bracket 31 away from the battery pack 7, with the lens of the second 3D scanning camera 35 facing the side surface 72 or the end surface 73 of the battery pack 7. The second 3D scanning camera 35 may be located between the second 3D camera 33 and the third 2D camera 34, and a distance is provided between the second 3D scanning camera 35 and the second 3D camera 33, while a distance is also provided between the second 3D scanning camera 35 and the third 2D camera 34. Thus, the 3D side surface image and the 3D end surface image, which can characterize the height information of the various portions of the side surface 72 and the end surface 73 of the battery, can be acquired by the second 3D scanning camera 35.

In the above embodiments, since the second 3D scanning camera 35 is fixed to the side, away from the second linear module 52, of the second bracket 31, the second 3D scanning camera 35 can be utilized to acquire the 3D side surface image and the 3D end surface image of the battery pack 7, thereby obtaining the depth information of the side surface 72 and the end surface 73 of the battery pack 7 according to the 3D side surface image and the 3D end surface image. Additionally, the second 3D scanning camera 35 is located between the second 3D camera 33 and the third 2D camera 34, which can reduce the mutual occlusion among the second 3D scanning camera 35, the second 3D camera 33, and the third 2D camera 34.

In some possible embodiments of the present disclosure, the second camera set 3 further includes a second 2D line scan camera 36. The second 2D line scan camera 36 is fixed to the side, away from the second linear module 52, of the second bracket 31, and is located at an end, away from the third 2D camera 34, of the second bracket 31. The second 2D line scan camera 36 is configured to capture a side surface line-scan image or an end surface line-scan image of the battery pack 7.

In the embodiments of the present disclosure, the second 2D line scan camera 36 may also be disposed in the second camera set 3, and the second 2D line scan camera 36 may be fixed to the second bracket 31. For example, the second 2D line scan camera 36 may be fixed to the side, away from the second linear module 52, of the second bracket 31, and the second 2D line scan camera 36 is oriented to face the side surface 72 or the end surface 73 of the battery pack 7. If the second 2D line scan camera 36 employs a 2D color line scan camera, during the movement of the second camera set 3 relative to the side surface 72 or the end surface 73 of the battery pack 7, the side surface line-scan image and the end surface line-scan image of the battery pack 7 can be acquired by the second 2D line scan camera 36.

Illustratively, the third 2D camera 34 may be disposed at one end of the second bracket 31, while the second 2D line scan camera 36 may be disposed at the other end of the second bracket 31, such that the second 2D line scan camera 36 and the third 2D camera 34 are kept away from each other.

In the above embodiments, since the second camera set 3 further includes the second 2D line scan camera 36, areas of the side surface 72 and the end surface 73 of the battery pack 7 can be captured by the second 2D line scan camera 36, so as to facilitate the acquisition of the side surface line-scan image and the end surface line-scan image containing the overall planar information of the side surface 72 and the end surface 73 of the battery pack 7, thereby obtaining the 2D image information of the side surface 72 and the end surface 73. Furthermore, the 2D line scan images of the side surface 72 and the end surface 73 can be combined with the 3D images of the side surface 72 and the end surface 73, respectively, which helps to obtain more comprehensive information of the side surface image and the end surface image.

In some possible embodiments of the present disclosure, the second camera set 3 further includes a fifth bar light source 374. The fifth bar light source 374 is rotatably disposed on the second bracket 31 around the third direction Z, and is located on a side, close to the battery pack 7, of the second 2D line scan camera 36. The fifth bar light source is configured to illuminate the capturing area of the second 2D line scan camera 36 on the battery pack 7.

In the embodiments of the present disclosure, a corresponding bar-shaped fill light may be provided for the second 2D line scan camera 36 in the second camera set 3, to illuminate the capturing area of the second 2D line scan camera 36 using the bar-shaped fill light, thereby enabling the capturing area to have uniform brightness and the like.

Illustratively, the fifth bar light source 374 may be disposed at a side edge of the second bracket 31, and the fifth bar light source 374 is positioned adjacent to the second 2D line scan camera 36; the fifth bar light source 374 may be located on the side, close to the battery pack 7, of the second 2D line scan camera 36. Additionally, an extension direction of the fifth bar light source 374 is parallel to the third direction Z. Thus, the illumination area of the fifth bar light source 374 can cover the capturing area of the second 2D line scan camera 36 on the side surface 72 and the end surface 73 of the battery pack 7, thereby enabling the capturing area of the second 2D line scan camera 36 on the side surface 72 and the end surface 73 of the battery pack 7 to have uniform brightness. For example, the fifth bar light source 374 may employ an LED light or the like.

In another example, a fifth light source mounting bracket 378 matching the fifth bar light source 374 may be adopted. The fifth light source mounting bracket 378 is fixed to the second bracket 31 by bolts, and two ends of the fifth bar light source 374 are rotatably connected to the fifth light source mounting bracket 378 via a rotating shaft. Thus, the fifth bar light source 374 can rotate, relative to the second bracket 31, around the third direction Z, thereby facilitating the adjustment of the illumination area of the fifth bar light source 374 on the side surface 72 and the end surface 73 of the battery pack 7.

In the above embodiments, since the fifth bar light source 374 is disposed at a position on the second bracket 31 adjacent to the second 2D line scan camera 36, the capturing area of the second 2D line scan camera 36 can be illuminated by the fifth bar light source 374, which is conducive to improving the quality of the side surface line-scan image and the end surface line-scan image captured by the second 2D line scan camera 36. Additionally, the fifth bar light source 374 is rotatably disposed on the second bracket 31, such that the adjustment of the illumination area of the fifth bar light source 374 on the side surface 72 or the end surface 73 of the battery pack 7 is facilitated, thereby enabling the illumination area of the fifth bar light source 374 to coincide with the capturing area of the second 2D line scan camera 36.

In some possible embodiments of the present disclosure, the battery pack 7 inspection apparatus further includes a fourth rotating member 54, and the second bracket 31 is connected to the second linear module 52 via the fourth rotating member 54; in the case where the second linear module 52 moves, in the first direction X, to one of two ends of the two second support beams 111, the fourth rotating member 54 is capable of driving the second camera set 3 to rotate to face the end surface 73 of the battery pack 7, or the fourth rotating member 54 is capable of driving the second camera set 3 to rotate to face the side surface 72 of the battery pack 7.

In the embodiments of the present disclosure, in the embodiments of the present disclosure, as shown in FIG. 2, the second driving mechanism 5 further includes a fourth rotating member 54. The fourth rotating member 54 is connected to the second linear module 52, and the rotation axis of the fourth rotating member 54 is parallel or approximately parallel to the third direction Z. The second camera set 3 is connected to the fourth rotating member 54 via the second bracket 31. For example, the side, close to the second linear module 52, of the second bracket 31 may be connected to the fourth rotating member 54.

Illustratively, the fourth rotating member 54 may employ a rotation driving member and a rotating shaft. For example, the second bracket 31 is connected to the second linear module 52 via the rotating shaft, the rotation driving member is disposed on the second linear module 52, and the rotation driving member and the rotating shaft are drivingly connected via a gear or the like. The rotation driving member may employ a servo motor or the like. The fourth rotating member 54 may also employ a servo motor; the servo motor is disposed on the second linear module 52, and the second bracket 31 is fixed to an output shaft of the servo motor. In this way, the second camera set 3 can be driven by the fourth rotating member 54 to rotate, relative to the battery pack 7, around the third direction Z.

In the above embodiments, since the second bracket 31 is connected to the second linear module 52 via the fourth rotating member 54, the second camera set 3 can be driven by the fourth rotating member 54 to rotate around the third direction Z, such that the orientation of the cameras in the second camera set 3 can be adjusted; that is, the cameras in the second camera 3 assembly can be oriented to face the side surface 72 of the battery pack 7 or the end surface 73 of the battery pack 7. In this way, the second camera set 3 can be utilized to capture both the side surface image of the battery pack 7 and the end surface image of the battery pack 7, which is conducive to improving the utilization efficiency of the second camera set 3.

In some possible embodiments of the present disclosure, the battery pack 7 inspection apparatus further includes a fourth linear module 53. The fourth linear module 53 is slidably disposed on the second linear module 52 in the third direction Z; the fourth rotating member 54 is connected to the fourth linear module 53, and the fourth linear module 53 is capable of driving the second camera set 3 to move in the third direction Z.

In the embodiments of the present disclosure, in the embodiments of the present disclosure, as shown in FIG. 2, the fourth linear module 53 may be disposed in the second driving mechanism 5, such that the second camera set 3 is driven by the fourth linear module 53 to move in the third direction Z.

Illustratively, the fourth linear module 53 may be configured in a structural form including a fourth driving member and a fourth guide assembly. The fourth driving member may employ a motor, a hydraulic cylinder, a pneumatic cylinder, a servo motor, or the like. The fourth guide assembly may employ a matched fourth guide rail and fourth slider, or the like. The fourth guide rail may extend in the third direction Z, and the fourth guide rail is fixed to the second slider in the second linear module 52. The fourth slider is slidably disposed on the fourth guide rail. The fourth driving member is fixed to the fourth guide rail, and an output member of the fourth driving member is drivingly connected to the fourth slider. For example, an output shaft of the servo motor is connected to the fourth slider by a belt or a chain, or an output member of the hydraulic cylinder, the pneumatic cylinder, or the like is connected to the fourth slider. The fourth linear module 53 may also employ a fourth linear motor, and the fourth linear motor is fixed to the second slider in the second linear module 52. Then, the fourth rotating member 54 is fixed to the fourth slider of the fourth linear module 53. In this way, the sixth linear module 51 is capable of driving the second linear module 52 to move in the first direction X, while the second linear module 52 is capable of driving the fourth linear module 53 to move in the second direction Y, and the fourth linear module 53 is, in turn, capable of driving the fourth rotating member 54 to move in the third direction Z, which can thereby drive the second camera set 3 to move in the third direction Z.

In the above embodiments, since the fourth rotating member 54 is connected to the second linear module 52 via the fourth linear module 53, the second camera set 3 can be driven by the fourth linear module 53 to move in the third direction Z, such that the position of the second camera set 3, relative to the side surface 72 and the end surface 73 of the battery pack 7 in the third direction Z, can be adjusted, thereby capturing the side surface images and the end surface images of various areas of the side surface 72 and the end surface 73.

In some possible embodiments of the present disclosure, the battery pack 7 inspection apparatus further includes a position detection member (not shown in the figures). In the first direction X, at least one end of the first support beam 121 is fixed with the position detection member. The position detection member is configured to detect a position of the first linear module 42 on the first support beam 121, to cause the first linear module 42 to stop moving relative to the first support beam 121, or to cause the first linear module 42 to be at an origin position relative to the first support beam 121; and/or, in the first direction X, at least one end of the second support beam 111 is provided with the position detection member, and the position detection member is configured to detect a position of the second linear module 52 on the second support beam 111, to cause the second linear module 52 to stop moving relative to the second support beam 111, or to cause the second linear module 52 to be at an origin position relative to the second support beam 111.

In the embodiments of the present disclosure, a plurality of position detection members may be disposed in the battery pack 7 inspection apparatus to determine whether various components, such as the first linear module 42 and the second linear module 52, have returned to the origin position or have reached the stop position relative to the gantry truss 1.

Illustratively, one limit sensor, serving as the position detection member, may be disposed at each of the two ends of the first support beam 121, and the limit sensor may be electrically connected to the controller of the battery pack 7 inspection apparatus. In this way, during the process in which the first linear module 42 slides relative to the first support beam 121 in the first direction X, the controller can, after the limit sensor detects a signal, control the first linear module 42 to stop moving in a timely manner. Alternatively, one origin sensor, serving as the position detection member, may be disposed at each of the two ends of the first support beam 121. In this way, during the process in which the first linear module 42 moves to the initial position along the first support beam 121, whether the first linear module 42 has returned to the accurate origin position can be detected by the origin sensor.

In another example, one limit sensor, serving as the position detection member, may also be disposed at each of the two ends of the second support beam 111, and the limit sensor may be electrically connected to the controller of the battery pack 7 inspection apparatus. In this way, during the process in which the second linear module 52 slides relative to the second support beam 111 in the first direction X, the controller can, after the limit sensor detects a signal, control the second linear module 52 to stop moving in a timely manner. Alternatively, one origin sensor, serving as the position detection member, may be disposed at each of the two ends of the second support beam 111. In this way, during the process in which the second linear module 52 moves to the initial position along the second support beam 111, whether the second linear module 52 has returned to the accurate origin position can be detected by the origin sensor.

In the above embodiments, since the position sensor is provided for the first linear module 42 and/or the second linear module 52, the position of the first linear module 42 relative to the first support beam 121 can be detected by the position sensor, and the position of the second linear module 52 relative to the second support beam 111 can be detected by the position sensor, such that whether the first linear module 42 and/or the second linear module 52 have moved to a desired position can be determined, which is conducive to improving the accuracy of the movement position of the first linear module 42 and/or the second linear module 52.

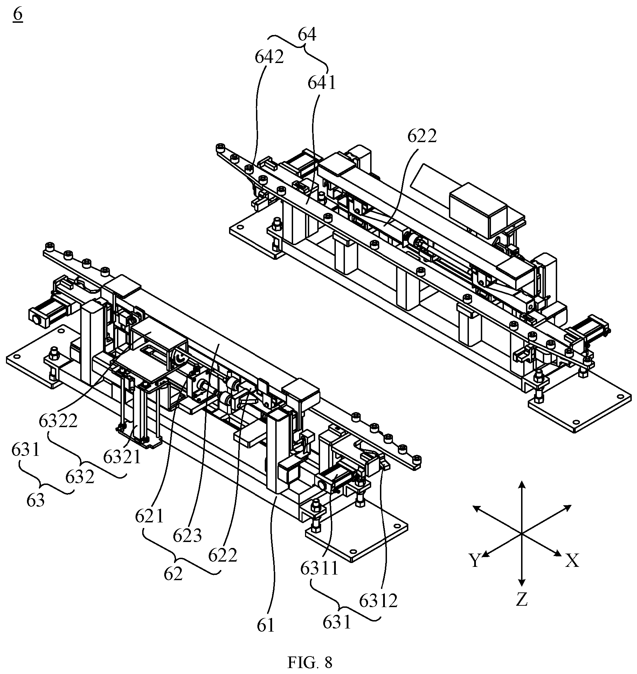

In some possible embodiments of the present disclosure, referring to FIG. 8, FIG. 8 is a schematic structural diagram of a positioning device 6 in the battery pack 7 inspection apparatus according to the present disclosure. As shown in FIGS. 1 and 8, the battery pack 7 inspection apparatus further includes the positioning device 6. The positioning device 6 includes a positioning base 61, a lifting mechanism 62, and a positioning mechanism 63. The positioning base 61 is disposed adjacent to the second frame body 11; the lifting mechanism 62 is slidably disposed on the positioning base 61 in a third direction Z and is configured to drive the battery pack 7 to move, in the third direction Z, toward or away from the first camera set 2; the positioning mechanism 63 is slidably disposed on the positioning base 61 and is capable of moving in a direction toward the battery pack 7 to limit a position of the battery pack 7 relative to the gantry truss 1.

In the embodiments of the present disclosure, as shown in FIG. 1, after the battery pack 7 is transported into the gantry truss 1 of the battery pack 7 inspection apparatus, the battery pack 7 needs to be limited to a determined position relative to the battery pack 7 inspection apparatus. Thus, the positioning device 6 can be disposed in the battery pack 7 inspection apparatus, thereby limiting the position and movement of the battery pack 7 relative to the gantry truss 1 by means of the positioning device 6. For example, in the third direction Z, the positioning device 6 may be disposed within the gantry truss 1, and the positioning device 6 may be located in a lower area within the gantry truss 1.

In the embodiments of the present disclosure, as shown in FIG. 8, the positioning base 61 is configured to provide mounting points for other components in the positioning device 6, and is capable of fixing the positioning device 6 at a position corresponding to the gantry truss 1. For example, the positioning base 61 may be configured as a frame structure. For example, two independent frames, distributed along a second direction Y, are provided, and the independent frames extend in a first direction X; thus, the area between the two frames may serve as a parking space for parking a conveying device and the battery pack 7.

In the embodiments of the present disclosure, the lifting mechanism 62 may be disposed in the positioning device 6, such that a tray supporting the battery pack 7 is lifted by a certain height in the third direction Z by means of the lifting mechanism 62.

Illustratively, the lifting mechanism 62 may be configured in a structural form including a lifting drive member 621, a lifting transmission member 622, and a lifting beam 623. The lifting drive member 621 may employ a pneumatic cylinder, a hydraulic cylinder, or the like, and the lifting drive member 621 is fixed to the positioning base 61. The lifting transmission member 622 may employ a wedge block. The wedge block is connected to an output member of the lifting drive member 621, and the wedge block may be slidably mounted on the positioning base 61 in the first direction X. The lifting beam 623 may be configured as a long rod-shaped structure extending in the first direction X, and the lifting beam 623 is slidably mounted on the positioning base 61 in a vertical direction. A roller may be disposed on a side, close to the wedge block, of the lifting beam 623, and the roller abuts against an inclined surface of the wedge block. In this way, during the process in which the lifting drive member 621 drives the wedge block to move in the first direction X, the roller rolls relative to the inclined surface of the wedge block, such that the lifting beam 623 can move upward or downward in the third direction Z to realize the lifting or lowering of the battery pack 7, thereby enabling the battery pack 7 to move toward or away from the first camera set 2.

In the embodiments of the present disclosure, the positioning mechanism 63 may be disposed on the positioning base 61. After the conveying device conveys the battery pack 7 into the parking space, the movement of the conveying device and the battery pack 7 can be limited by means of the positioning mechanism 63, and the battery pack 7 is limited to a desired position. For example, a plurality of positioning members may be disposed in the positioning mechanism 63, thereby positioning the battery pack 7 from a plurality of directions by means of the plurality of positioning members.

In the above embodiments, since the lifting mechanism 62 is provided in the positioning device 6, the battery pack 7 can be lifted by a certain distance in the third direction Z by means of the lifting mechanism 62, such that each battery pack 7 can be at a determined height relative to the first camera set 2. Additionally, a positioning structure is disposed in the positioning device 6, and the position of the battery pack 7 relative to the gantry truss 1 can be limited by means of the positioning mechanism 63, such that each battery pack 7 can be at a determined position relative to the first camera set 2 in a horizontal plane, thereby facilitating the improvement in the quality of the top surface image, the side surface image, and the end surface image of the battery pack 7 acquired by the first camera set 2 and the second camera set 3.

In some possible embodiments of the present disclosure, the battery pack 7 inspection apparatus further includes the positioning device 6, and the positioning mechanism 63 includes a transport positioning assembly 631 and a tray positioning assembly 632. The positioning mechanism 63 is slidably disposed on the positioning base 61 in the first direction X and is capable of moving, in the first direction X, toward the conveying device of the battery pack 7. The tray positioning assembly 632 is slidably disposed on a side, close to the first camera set 2, of the positioning base 61 in the third direction Z and is capable of moving, in the third direction Z, toward a tray supporting the battery pack 7.

In the embodiments of the present disclosure, as shown in FIG. 8, the transport positioning assembly 631 may be provided in the positioning mechanism 63, so as to limit the position of the conveying device for conveying the battery pack 7 relative to the gantry truss 1 by means of the transport positioning assembly 631. The conveying device may be an automated guided vehicle (AGV).

Illustratively, in the first direction X, one set of the transport positioning assembly 631 may be disposed at each end of the two frames serving as the positioning base 61, so as to limit the position of a transporting member relative to the gantry truss 1 by means of four sets of the transport positioning assemblies 631. For example, the transport positioning assembly 631 may be configured in a structural form including a seventh driving member and a first positioning member. The seventh driving member may employ a pneumatic cylinder, a hydraulic cylinder, an electric cylinder, or the like, and the first positioning member may be a positioning block fixed to an output member of the seventh driving member, a positioning plate, or the like. In this way, during the sliding of an output shaft of the seventh driving member, the first positioning member can be driven to move in the second direction Y, causing the first positioning member to be located in the parking space or away from the parking space, thereby restricting or releasing the conveying device.

In the embodiments of the present disclosure, as shown in FIG. 8, the tray positioning assembly 632 may be disposed in the positioning mechanism 63, so as to limit the position of the tray for supporting the battery pack 7 relative to the gantry truss 1 by means of the tray positioning assembly 632, thereby limiting the position of the battery pack 7 carried on the tray relative to the gantry truss 1.

Illustratively, in the second direction Y, one set of the tray positioning assembly 632 may be disposed on each of two sides of the two frames in the positioning base 61, so as to limit the position of the tray in the second direction Y by means of two sets of the tray positioning assemblies 632. For example, the tray positioning assembly 632 may be configured in a structural form including an eighth driving member and a second positioning member. The eighth driving member may employ a pneumatic cylinder, a hydraulic cylinder, an electric cylinder, or the like, and the second positioning member may be a positioning block fixed to an output member of the eighth driving member, a positioning plate, or the like. In this way, during the sliding of an output shaft of the eighth driving member, the second positioning member can be driven to move in the third direction Z, such that two second positioning members can clamp two sides of the tray or move away from the tray, thereby limiting the position of the tray in the second direction Y.

In the above embodiments, since the transport positioning assembly 631 is provided in the positioning mechanism 63, the transporting member for conveying the battery can be limited to a fixed position relative to the gantry truss 1 by means of the transport positioning assembly 631. The tray positioning assembly 632 is further provided in the positioning mechanism 63, and the tray supporting the battery can be limited to a fixed position by means of the tray positioning assembly 632, such that the battery can be limited to a fixed position relative to the gantry truss 1.

In some possible embodiments of the present disclosure, the positioning device 6 further includes a guiding assembly 64, and the guiding assembly 64 includes two sets of guide frames 641. The guide frames 641 are provided to extend in the first direction X, and both ends of the guide frames 641 are bent in a direction away from the side surface 72 of the battery pack 7 to guide the battery pack 7 into a limiting space formed by the two sets of guide frames 641. Each of the guide frames 641 is provided with a plurality of guide wheels 642 spaced apart from each other along an extension direction of the guide frame 641. In the case where an edge of the conveying device contacts the guide wheels 642, the guide wheels 642 rotate to limit a movement path of the conveying device.

In the embodiments of the present disclosure, as shown in FIG. 8, the guiding assembly 64 may be further provided in the positioning device 6, so as to guide and limit the movement path of the conveying device in the parking space by means of the guiding assembly 64.

Illustratively, the guide frame 641 may be disposed on the positioning base 61, and the guide frame 641 extends in the first direction X. Both ends of the guide frame 641 may be bent in a direction away from the side surface 72 of the battery pack 7, such that the distance between the two guide frames 641 is relatively large at the open end and the exit end, thereby facilitating the entering of the conveying device to the limiting space formed by the two guide frames 641. Additionally, a plurality of guide wheels 642 may be provided on the guide frame 641. The plurality of guide wheels 642 are sequentially distributed on the guide frame 641 along the first direction X; that is, the plurality of guide wheels 642 are spaced apart from each other on the guide frame 641 along the extension direction of the guide frame 641. The guide frame 641 and the guide wheels 642 may serve as a guiding assembly 64. In this way, after the edge of the conveying device comes into contact with the guide wheels 642, the guide wheels 642 rotate, which is conducive to reducing the friction between the conveying device and the positioning device 6, and the movement path of the conveying device can be sequentially limited by the plurality of guide wheels 642.

In the embodiments of the present disclosure, an entrance grating and an exit grating may also be provided in the positioning device 6. That is, in the first direction X, the entrance grating may be disposed at an entrance end of the positioning device 6, and the exit grating may be disposed at an exit end of the positioning device 6. By means of the entrance grating and the exit grating, whether a battery has entered the parking space can be determined, and whether a foreign object has entered the parking space can also be detected.

In the above embodiments, since the guiding assembly 64 is provided in the positioning device 6, the movement path of the conveying device, during the movement of the conveying device toward the positioning device 6, can be guided and limited by the guiding assembly 64, and the friction between the conveying device and the positioning device 6 can be reduced by the guide wheels 642 in the guiding assembly 64.

Based on the same technical concept, the embodiments of the present disclosure further provide a battery pack inspection method. The method is applicable to the battery pack inspection apparatus according to any one of the above embodiments, and the implementation of the method may refer to the implementation of the battery pack inspection apparatus described above.

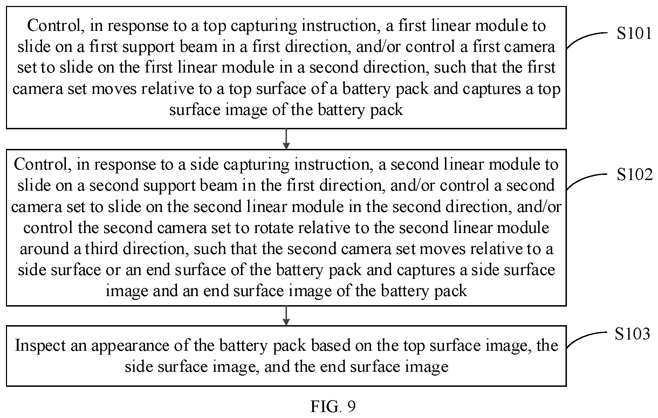

Referring to FIG. 9, FIG. 9 illustrates a schematic flowchart of a control method for the battery pack inspection apparatus according to the present disclosure. The battery pack inspection method is applicable to the battery pack inspection apparatus according to any one of the above embodiments. As shown in FIG. 9, the control method for the battery pack inspection apparatus includes the following steps S101 to S103, which will be described below with reference to FIG. 9.

In S101, in response to a top capturing instruction, a first linear module is controlled to slide on a first support beam in a first direction, and/or a first camera set is controlled to slide on the first linear module in a second direction, such that the first camera set moves relative to a top surface of a battery pack and captures a top surface image of the battery pack.

In the embodiments of the present disclosure, a conveying device may be controlled to transport the battery pack to be inspected to an inspection station in the battery pack inspection apparatus, that is, transport the battery pack to be inspected into a parking space defined by a positioning device in a gantry truss.

Illustratively, the conveying device may be an AGV. When the AGV arrives at a position close to the battery pack inspection apparatus, the AGV may send an inbound request to a controller of the battery pack inspection apparatus; and the controller, in response to the inbound request, may issue a grating shielding signal to the positioning device, and an entrance grating detection assembly on the positioning device is turned off in response to the grating shielding signal. In this way, the AGV carries the battery pack to move into the parking space of the positioning device, and the entrance grating detection assembly is started again; at this point, the AGV, together with the battery pack, is located in the positioning device.

In another example, after the battery pack to be inspected arrives in the positioning device, the positioning device may be controlled to position the battery pack, so as to limit the battery at a determined inspection position.

For example, a transport positioning assembly in the positioning device may be controlled to move in a direction toward the AGV until the transport positioning assembly abuts against the AGV, thereby limiting the AGV at a fixed position relative to the gantry truss, such that the battery pack can be located at a substantially accurate position relative to the gantry truss. After the positioning of the AGV is completed, a lifting mechanism in the positioning device may be controlled to perform a lifting action; for example, the lifting mechanism is caused to move in a third direction to lift a tray supporting the battery pack by a certain distance in the third direction, such that the battery pack reaches a fixed height; that is, the distance between the battery pack and the first camera set reaches a preset distance.

Subsequently, after the lifting of the battery is completed, a tray positioning assembly in the positioning device may be controlled to position the tray supporting the battery pack in a horizontal plane; for example, two sets of opposite tray positioning assemblies are controlled to move in a direction toward the tray in a vertical direction, such that the tray positioning assemblies respectively abut against two opposite side edges of the tray, thereby clamping and limiting the tray at a fixed position. In this way, the battery pack can be limited at the fixed inspection position relative to the gantry truss in both the horizontal plane and the third direction, such that the battery is located at a determined position relative to the battery pack inspection apparatus.

In the embodiments of the present disclosure, after the positioning of the battery pack is completed, a top capturing instruction and a side capturing instruction may be generated. Alternatively, the top capturing instruction and the side capturing instruction may also be generated based on an input operation on the controller by a user. The embodiments of the present disclosure do not limit the manner in which the top capturing instruction and the side capturing instruction are generated.

In the embodiments of the present disclosure, the controller, after receiving the top capturing instruction, may control the first camera set to capture the top surface image of the top surface of the battery pack.

Illustratively, as shown in FIG. 3, a first linear module, a third linear module, a fifth linear module, and a third rotating member may be controlled to drive the first camera set to move relative to the top surface 71 of the battery pack 7. For example, the fifth linear module is controlled to move in the first direction X, so as to drive the first linear module to move in the first direction X. The first linear module is controlled to move in a second direction Y, so as to drive the first camera set to move to the vicinity of a top surface acquisition point 81 above the top surface 71 of the battery pack 7. The top surface acquisition point 81 is a spatial point above the top surface 71 of the battery pack 7, such as a spatial point above a corner of the top surface 71 of the battery pack 7. After the first camera set reaches the vicinity of the top surface acquisition point 81, the third linear module may be controlled to move in a third direction Z, so as to adjust the distance between the first camera set and the top surface 71 of the battery pack 7 to a preset capturing distance, such that the first camera set is located at the top surface acquisition point 81. In this way, cameras in the first camera set can be located at a fixed point relative to the top surface 71 of the battery pack 7, such that the first camera set can start capturing the top surface image of the top surface 71 of the battery pack 7 from the fixed point.

In another example, as shown in FIG. 3, after the first camera set reaches the top surface acquisition point 81, the fifth linear module and the first linear module may be controlled to drive the first camera set to move along a preset top surface 71 path. The preset top surface 71 path may be a virtual route that is parallel to the top surface 71 of the battery pack 7 and extends in the first direction X and the second direction Y. For example, the preset top surface 71 path may be an approximately S-shaped path, such that the cameras in the first camera set can capture the top surface image of each area of the top surface 71.

In S102, in response to a side capturing instruction, a second linear module is controlled to slide on a second support beam in the first direction, and/or a second camera set is controlled to slide on the second linear module in the second direction, and/or the second camera set is controlled to rotate relative to the second linear module around a third direction, such that the second camera set moves relative to a side surface or an end surface of the battery pack and captures a side surface image and an end surface image of the battery pack.

In the embodiments of the present disclosure, as shown in FIG. 3, during the acquisition of the top surface image for the top surface 71 of the battery pack 7, or before or after the acquisition of the top surface image, the second camera set can be controlled to acquire the side surface image and the end surface image for the side surface 72 and the end surface 73 of the battery pack 7. For example, after the controller receives the side capturing instruction, the controller can control the second camera set to capture the side surface image of the side surface 72 of the battery pack 7, or capture the end surface image of the end surface 73 of the battery pack 7.

Illustratively, as shown in FIG. 3, a second linear module, a fourth linear module, a sixth linear module, and a fourth rotating member may be controlled to drive the second camera set to move relative to the side surface 72 and the end surface 73 of the battery pack 7. For example, the sixth linear module is controlled to move in the first direction X, so as to drive the second linear module to move in the first direction X. The second linear module is controlled to move in the second direction Y, so as to drive the second camera set to move relative to the side surface 72 of the battery pack 7, and meanwhile, the second camera set is controlled to capture the side surface image of the side surface 72. Alternatively, the sixth linear module and the second linear module are controlled to drive the second camera set to move to a position adjacent to the end surface 73 of the battery pack 7, and the fourth rotating member is controlled to drive the second camera set to rotate to face the end surface 73 of the battery pack 7. Then, the second linear module is controlled to drive the second camera set to move relative to the end surface 73 in the second direction Y, and the second camera set is controlled to capture the end surface image of the end surface 73.

In S103, an appearance of the battery pack is inspected based on the top surface image, the side surface image, and the end surface image.

In the embodiments of the present disclosure, after the first camera set and the second camera set finish acquiring the top surface image, the side surface image, and the end surface image of the battery pack, or during the acquisition of the top surface image, the side surface image, and the end surface image of the battery pack, the first camera set can upload the acquired top surface image to a processor in a timely manner, and the second camera set can also upload the acquired side surface image and end surface image to the processor in a timely manner; the processor can then determine whether a defect exists on the top surface, the side surface, or the end surface of the battery based on the obtained top surface image, side surface image, and end surface image.

Illustratively, a plurality of standard images of the battery pack may be stored in a memory electrically connected to the processor, such as a standard top surface image of the top surface of the battery pack, a standard side surface image of the side surface of the battery pack, and a standard end surface image of the end surface of the battery pack. The processor can compare the received top surface image with the standard top surface image to determine whether a defect exists in the top surface image; the processor can also compare the received side surface image with the standard side surface image to determine whether a defect exists in the side surface image; the processor can further compare the received end surface image with the standard end surface image to determine whether a defect exists in the end surface image. For example, whether a scratch exists in the top surface image, the side surface image, or the end surface image can be determined, or whether mounting positions or postures of some components externally mounted on the battery pack are accurate or the like can be determined, thereby determining whether a defect exists in the battery pack.

In the battery inspection method according to the embodiments of the present disclosure, during the inspection of the battery pack, since the top surface image of the top surface of the battery pack can be acquired by the first camera set, and the side surface image of the side surface of the battery pack and the end surface image of the end surface of the battery pack can be acquired by the second camera set, a plurality of images, which can characterize whether a defect exists in the appearance of the battery pack, can be obtained. Additionally, the processor or the like may be utilized to identify and inspect the top surface image, the side surface image, and the end surface image, to determine whether a defect exists in the top surface image, the side surface image, or the end surface image, thereby improving the accuracy and inspection efficiency of the appearance inspection for the battery pack.

In some possible embodiments of the present disclosure, based on FIG. 9, step S102 in FIG. 9 may be implemented according to the following steps S1021 to S1023.

In S1021, the second linear module is controlled to slide on the second support beam in the first direction, such that the second camera set moves relative to the side surface of the battery pack, and the second camera set is controlled to rotate relative to the second linear module around the third direction, such that a capturing direction of the second camera set faces the side surface of the battery pack, and the side surface image of the battery pack is captured.

In the embodiments of the present disclosure, as shown in FIG. 3, the second linear module may be controlled to move in the second direction Y, such that two second camera sets are respectively located at positions opposite to the side surface 72 of one battery pack 7. Additionally, a fourth rotating member may be controlled to drive the second camera set to rotate, such that the capturing direction of the cameras in each second camera set faces the corresponding side surface 72. For example, the second camera set may be located at a side surface acquisition point 83 opposite to the side surface 72, and the side surface acquisition point 83 may be a spatial point adjacent to the side surface 72 of the battery pack 7.

Illustratively, after the second camera set arrives at the side surface acquisition point 83, a sixth linear module and a fourth linear module may be controlled to drive the second camera set to move relative to the side surface 72. For example, the two second camera sets are caused to respectively arrive at the side surface acquisition points 83 corresponding to two side surfaces 72, and the sixth linear module may be controlled to drive the second camera sets to move along a preset side surface path 84, such that the two second camera sets can simultaneously capture the side surface images of the two side surfaces 72. The preset side surface path 84 is a virtual route parallel to the side surface 72 of the battery pack 7.

In S1022, the second linear module is controlled to slide on the second support beam in the first direction until the second camera set extends beyond, in the first direction, a space in which the battery pack is located.

In the embodiments of the present disclosure, after the side surface image acquisition of the side surface is completed, the sixth linear module may be controlled to drive the second linear module to slide relative to the second support beam in the first direction until the second camera set extends beyond, in the first direction, the space in which the battery pack is located, that is, until the second camera set is located at a position where the second camera set does not collide with the battery pack during the process in which the fourth rotating member drives the second camera set to rotate around the third direction.

In S1023, the second camera set is controlled to slide on the second linear module in the second direction, such that the second camera set moves relative to the end surface of the battery pack, and the second camera set is controlled to rotate relative to the second linear module around the third direction, such that the capturing direction of the second camera set faces the end surface of the battery pack, and the end surface image of the battery pack is captured.

In the embodiments of the present disclosure, as shown in FIG. 3, after the second camera set extends beyond, in the first direction X, the space in which the battery pack 7 is located, the second camera set is located on a side, away from the center of the battery pack 7, of a plane defined by the end surface 73. The second linear module may be controlled to move in the second direction Y, to drive one second camera set to move relative to one end surface 73 in the second direction Y, and the fourth rotating member may be controlled to drive the second camera set to rotate around the third direction Z, such that the capturing direction of the cameras in the second camera set faces the corresponding end surface 73. For example, the second camera set may be located at an end surface acquisition point 85 opposite to the end surface 73, and the end surface acquisition point 85 may be a spatial point adjacent to the end surface 73 of the battery pack 7.

Illustratively, after the second camera set arrives at the end surface acquisition point 85, the second linear module and the fourth linear module may be controlled to drive the second camera set to move relative to the end surface 73. For example, after one second camera set arrives at the end surface acquisition point 85 corresponding to one end surface 73, the second linear module may be controlled to drive the second camera set to move along a preset end surface path 86 corresponding to the end surface 73, such that the end surface 73 of the second camera set can capture the end surface image. The preset end surface path 86 is a virtual route parallel to the end surface 73 of the battery pack 7.

In another example, after the end surface image acquisition of one end surface 73 is completed, the sixth linear module may be controlled to drive the second camera set to move to a position adjacent to another end surface 73. Additionally, the second linear module and the fourth linear module are controlled to drive the second camera set to move relative to the other end surface 73, such that the second camera set arrives at the end surface acquisition point 85 corresponding to the other end surface 73. The second linear module and the fourth linear module may be further controlled to drive the second camera set to move relative to another end surface 73. For example, after one second camera set arrives at the end surface acquisition point 85 corresponding to the other end surface 73, the second linear module may be controlled to drive the second camera set to move along the preset end surface path 86 corresponding to the other end surface 73, such that the end surface 73 of the second camera set can capture the end surface image. This process is repeated until the capturing of the side surface images of all side surfaces 72 is completed, and the capturing of the end surface images of all end surfaces 73 is completed.

In the above embodiments, since the second linear module is controlled to move in the first direction, the second camera set is controlled to move in the second direction, and the second camera set is controlled to rotate around the third direction, the second camera set can move to positions corresponding to each side surface and each end surface, and the capturing direction of the second camera set can face each side surface and each end surface of the battery pack; furthermore, the second camera set can be driven to move relative to each side surface and each end surface, such that the second camera set can be utilized to complete the capturing of the side surface images of all side surfaces of the battery pack, and complete the capturing of the end surface images of all end surfaces.

In some possible embodiments of the present disclosure, based on FIG. 9, step S101 in FIG. 9 may be implemented according to the following steps S1011 to S1012.

In S1011, the first sliding member is controlled to move relative to the first bracket in a third direction, to drive the first 3D camera to move relative to a pin header connector on the top surface of the battery pack in the third direction, such that a distance between the first 3D camera and the pin header connector meets a preset distance threshold.

In the embodiments of the present disclosure, a pin header connector is usually provided on the top surface of the battery pack, and the pin header connector is often provided with a plurality of pins or a plurality of pin sockets. When the first 3D camera is utilized to capture the three-dimensional image of the pin header connector, the first 3D camera needs to be parallel to an extension direction of the pins in the pin header connector, and the distance between the first 3D camera and the pins needs to be the preset distance threshold.

Illustratively, the first sliding member may be controlled to move in the third direction, such that the first 3D camera is driven by the first sliding member to move relative to the top surface of the battery pack in the third direction, to make the distance between the first 3D camera and the pin header connector fall within the range of the preset distance threshold, that is, to make the distance between the first 3D camera and the pin header connector consistent with or close to the focal length of the first 3D camera.

In S1012, the first rotating member is controlled to rotate relative to the first bracket around the third direction, to drive the first 3D camera to rotate relative to the pin header connector around the third direction, such that an included angle between the first 3D camera and the pin header connector meets a preset included angle threshold.

In the embodiments of the present disclosure, an included angle of 0 to 90° may exist between the pin header connector on the top surface of the battery pack and the top surface; that is, the pin header connector is not perpendicularly disposed on the top surface of the battery pack. The first rotating member may be controlled to drive the first 3D camera to rotate around the third direction, so as to adjust the capturing angle of the first 3D camera relative to the pin header connector, such that the included angle between the first 3D camera and the pin header connector on the top surface is a right angle; that is, the first 3D camera is perpendicular or approximately perpendicular to the end surface, away from the top surface of the battery pack, of the pin header connector. In this way, the included angle between the first 3D camera and the pin header connector can meet the preset included angle threshold, and parallel capturing of the pin header connector by the camera can be realized. It should be noted that the preset included angle threshold may also be a non-perpendicular angle, and the embodiments of the present disclosure do not limit the range and the numerical value of the preset included angle threshold.

In the above embodiments, since the first rotating member is controlled to drive the first 3D camera to rotate relative to the pin header connector on the top surface of the battery pack, the included angle between the first 3D camera and the pin header connector can be adjusted, thereby enabling the first 3D camera to be perpendicular to the pin header connector. Additionally, the first sliding member is controlled to drive the first 3D camera to move relative to the pin header connector in the third direction, such that the distance between the first 3D camera and the pin header connector can be adjusted, thereby realizing the parallel capturing of the pin header connector by the first 3D camera, which is conducive to reducing problems such as specular reflection and depth-of-field blur appearing in the top surface image including the pin header connector, and can improve the quality of the top surface image including the pin header connector.

The above embodiments are only used to illustrate the technical solutions of the present disclosure, rather than limit the same. Although the present disclosure has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present disclosure, and shall all fall within the scope of this specification of the present disclosure. In particular, the technical features mentioned in the embodiments can be combined in any manner, provided that there is no structural conflict.

## Claims

1. A battery pack inspection apparatus, comprising:
a gantry truss, comprising a first frame body and a second frame body, wherein the first frame body comprises two first support beams provided to extend in a first direction, and a first linear module is slidably disposed on the two first support beams in the first direction; the second frame body comprises two second support beams provided to extend in the first direction, and a second linear module is slidably disposed on the two second support beams in the first direction;
a first camera set, wherein the first camera set is slidably disposed on the first linear module in a second direction and is configured to capture a top surface image of a battery pack; the second direction is perpendicular to the first direction;
two oppositely disposed second camera sets, wherein the second camera sets are each slidably disposed on the second linear module in the second direction, and the second camera sets are rotatably connected to the second linear module around a third direction; the second camera sets are configured to capture a side surface image and an end surface image of the battery pack; the third direction is perpendicular to the first direction, and the third direction is perpendicular to the second direction; and
a processor, wherein the processor is configured to receive the top surface image, the side surface image, and the end surface image, and inspect an appearance of the battery pack based on the top surface image, the side surface image, and the end surface image.

2. The battery pack inspection apparatus according to claim 1, wherein the first camera set comprises a first 3D scanning camera and a first bracket provided with a first accommodating cavity; the first bracket comprises a first top plate and two first side plates, and upper ends of the two first side plates are fixed to two ends of the first top plate, respectively; the first top plate and the two first side plates define the first accommodating cavity, and a first opening of the first accommodating cavity faces a top surface of the battery pack in a third direction; the first bracket is slidably disposed on the first linear module via the first top plate or the first side plates; the third direction is perpendicular to the first direction, and the third direction is perpendicular to the second direction; and
the first 3D scanning camera is fixed to the first top plate and is located outside the first accommodating cavity, and the first 3D scanning camera is configured to capture a 3D top surface image of the battery pack.

3. The battery pack inspection apparatus according to claim 2, wherein the first camera set further comprises a first 2D line scan camera; the first 2D line scan camera is fixed to one of the first side plates and is located outside the first accommodating cavity, staggered from a fixing position of the first 3D scanning camera; the first 2D line scan camera faces a top surface of the battery and is configured to capture a first line scan image of the top surface.

4. The battery pack inspection apparatus according to claim 3, wherein the first camera set further comprises a first bar light source; the first bar light source is rotatably disposed on an outer wall of the first side plate, an illumination area of the first bar light source covers a capturing area of the first 2D line scan camera on the top surface, and the first bar light source is configured to illuminate the top surface.

5. The battery pack inspection apparatus according to claim 3 or 4, wherein the first camera set further comprises a first 2D camera; the first 2D camera is fixed to the other first side plate, and is located outside the first accommodating cavity and on a side close to the first opening; the first 2D camera faces a top surface of the battery pack and is configured to capture a 2D top surface image of the top surface.

6. The battery pack inspection apparatus according to claim 5, wherein the first camera set further comprises two second bar light sources; the second bar light sources are fixed to the first side plate on which the first 2D camera is disposed, the second bar light sources are located outside the first accommodating cavity and on a side close to the first opening, and the two second bar light sources are symmetrically disposed on two sides of the first 2D camera; an illumination area of the second bar light sources covers a capturing area of the first 2D camera on a top surface of the battery pack, and the second bar light sources are configured to illuminate the top surface of the battery pack.

7. The battery pack inspection apparatus according to claim 5 or 6, wherein the first camera set further comprises a first annular light source; the first annular light source is fixed to the first side plate on which the first 2D camera is disposed, and the first annular light source is located outside the first accommodating cavity and on a side close to the first opening; the first annular light source is coaxially disposed with the first 2D camera, an illumination area of the first annular light source covers a capturing area of the first 2D camera on a top surface of the battery pack, and the first annular light source is configured to illuminate the top surface of the battery pack.

8. The battery pack inspection apparatus according to any one of claims 5 to 7, wherein the first camera set further comprises a first 3D camera; the first 3D camera is movably disposed on an inner wall of the first top plate and is located between the first 2D line scan camera and the first 2D camera; the first 3D camera faces a top surface of the battery pack and is configured to capture an image of a pin header connector on the top surface of the battery pack.

9. The battery pack inspection apparatus according to claim 8, wherein the first camera set further comprises a first rotating member and a first sliding member; the first sliding member is fixed to an inner wall of the first top plate, the first rotating member is connected to the first sliding member, and the first 2D camera is disposed on the first rotating member; the first sliding member is capable of driving the first rotating member to move relative to the first bracket in the third direction, and the first rotating member is capable of driving the first 3D camera to rotate around the third direction.

10. The battery pack inspection apparatus according to any one of claims 2 to 9, wherein the battery pack inspection apparatus further comprises a third rotating member; the first bracket is connected to the first linear module via the third rotating member, and the third rotating member is configured to drive the first camera set to rotate around a third direction.

11. The battery pack inspection apparatus according to claim 10, wherein the battery pack inspection apparatus further comprises a third linear module; the third linear module is slidably disposed on the first linear module in the third direction, the third rotating member is connected to the third linear module, and the third linear module is capable of driving the first camera set to move in the third direction.

12. The battery pack inspection apparatus according to claim 11, wherein a height sensor is provided on the third linear module or the first bracket, and the height sensor is configured to detect a height distance between the first camera set and a top surface of the battery pack in the third direction, so as to adjust the height distance.

13. The battery pack inspection apparatus according to any one of claims 1 to 12, wherein the second camera set comprises a second bracket and a second 2D camera; the second bracket is perpendicular to the third direction, and in the third direction, one side of the second bracket is slidably connected to the second linear module; and
the second 2D camera is obliquely disposed on the second bracket at a preset angle, and is located on a side, close to the second linear module, of the second bracket, and the second 2D camera is configured to capture an edge image of an edge between a top surface and a side surface of the battery pack or an edge between the top surface and an end surface of the battery pack.

14. The battery pack inspection apparatus according to claim 13, wherein the second camera set further comprises two third bar light sources; the third bar light sources are obliquely disposed on the second bracket at the preset angle and are symmetrically disposed on two sides of the second 2D camera, and the third bar light sources are configured to illuminate the edge captured by the second 2D camera.

15. The battery pack inspection apparatus according to claim 13 or 14, wherein the second camera set further comprises a second 3D camera; the second 3D camera is rotatably disposed on the second bracket via a second rotating member, and is located on a side, away from the second linear module, of the second bracket; the second rotating member is capable of driving the second 3D camera to rotate relative to the second bracket around the first direction or the second direction, and the second 3D camera is configured to capture an image of a pin header connector on a side surface or an end surface of the battery pack.

16. The battery pack inspection apparatus according to claim 15, wherein the second camera set further comprises a third 2D camera; the third 2D camera is slidably disposed on the second bracket in the first direction or the second direction, and is located on a side, away from the second linear module, of the second bracket; the third 2D camera and the second 3D camera are spaced apart from each other on the second bracket, and the third 2D camera is configured to capture a 2D side surface image or a 2D end surface image of the battery pack.

17. The battery pack inspection apparatus according to claim 16, wherein the second camera set further comprises a second sliding member; the second sliding member is fixed to a side, away from the second linear module, of the second bracket, the third 2D camera is disposed on the second sliding member, and the second sliding member is capable of driving the third 2D camera to move relative to the second bracket in the first direction or the second direction.

18. The battery pack inspection apparatus according to claim 17, wherein the second camera set further comprises a second annular light source; the second annular light source is fixed to the second sliding member, is located on a side, close to a side surface or an end surface of the battery pack, of the third 2D camera, and is coaxially disposed with the third 2D camera; the second annular light source is configured to illuminate a capturing area of the third 2D camera on the side surface or the end surface of the battery pack.

19. The battery pack inspection apparatus according to any one of claims 16 to 18, wherein the second camera set further comprises two fourth bar light sources; the fourth bar light sources are fixed to a side, away from the second linear module, of the second bracket, and are located on a side, close to a side surface or an end surface of the battery pack, of the third 2D camera; the two fourth bar light sources are symmetrically disposed on two sides of the third 2D camera; an illumination area of the fourth bar light sources covers a capturing area of the third 2D camera on the side surface or the end surface of the battery pack, and the fourth bar light sources are configured to illuminate the capturing area of the third 2D camera.

20. The battery pack inspection apparatus according to any one of claims 16 to 19, wherein the second camera set further comprises a second 3D scanning camera; the second 3D scanning camera is fixed to a side, away from the second linear module, of the second bracket, and is located between the second 3D camera and the third 2D camera; the second 3D scanning camera is configured to capture a 3D side surface image or a 3D end surface image of the battery pack.

21. The battery pack inspection apparatus according to any one of claims 16 to 20, wherein the second camera set further comprises a second 2D line scan camera; the second 2D line scan camera is fixed to a side, away from the second linear module, of the second bracket, and is located at an end, away from the third 2D camera, of the second bracket; the second 2D line scan camera is configured to capture a side surface line-scan image or an end surface line-scan image of the battery pack.

22. The battery pack inspection apparatus according to claim 21, wherein the second camera set further comprises a fifth bar light source; the fifth bar light source is rotatably disposed on the second bracket around a third direction, and is located on a side, close to the battery pack, of the second 2D line scan camera; the fifth bar light source is configured to illuminate a capturing area of the second 2D line scan camera on the battery pack.

23. The battery pack inspection apparatus according to any one of claims 13 to 22, wherein the battery pack inspection apparatus further comprises a fourth rotating member; the second bracket is connected to the second linear module via the fourth rotating member; and
in a case where the second linear module moves, in the first direction, to one of two ends of the two second support beams, the fourth rotating member is capable of driving the second camera set to rotate to face an end surface of the battery pack, or the fourth rotating member is capable of driving the second camera set to rotate to face a side surface of the battery pack.

24. The battery pack inspection apparatus according to claim 23, wherein the battery pack inspection apparatus further comprises a fourth linear module; the fourth linear module is slidably disposed on the second linear module in the third direction, the fourth rotating member is connected to the fourth linear module, and the fourth linear module is capable of driving the second camera set to move in the third direction.

25. The battery pack inspection apparatus according to any one of claims 1 to 24, wherein the battery pack inspection apparatus further comprises a position detection member; in the first direction, at least one end of the first support beam is fixed with the position detection member; the position detection member is configured to detect a position of the first linear module on the first support beam, to cause the first linear module to stop moving relative to the first support beam, or to cause the first linear module to be at an origin position relative to the first support beam;
and/or, in the first direction, at least one end of the second support beam is provided with the position detection member; the position detection member is configured to detect a position of the second linear module on the second support beam, to cause the second linear module to stop moving relative to the second support beam, or to cause the second linear module to be at an origin position relative to the second support beam.

26. The battery pack inspection apparatus according to any one of claims 1 to 25, wherein the battery pack inspection apparatus further comprises a positioning device, and the positioning device comprises a positioning base, a lifting mechanism, and a positioning mechanism; the positioning base is disposed adjacent to the second frame body; the lifting mechanism is slidably disposed on the positioning base in a third direction and is configured to drive the battery pack to move, in the third direction, toward or away from the first camera set; the positioning mechanism is slidably disposed on the positioning base and is capable of moving in a direction toward the battery pack to limit a position of the battery pack relative to the gantry truss.

27. The battery pack inspection apparatus according to claim 26, wherein the positioning mechanism comprises a transport positioning assembly and a tray positioning assembly; the positioning mechanism is slidably disposed on the positioning base in the first direction and is capable of moving, in the first direction, toward a conveying device of the battery pack; the tray positioning assembly is slidably disposed on a side, close to the first camera set, of the positioning base in the third direction and is capable of moving, in the third direction, toward a tray supporting the battery pack.

28. The battery pack inspection apparatus according to claim 27, wherein the positioning device further comprises a guiding assembly, and the guiding assembly comprises two sets of guide frames; the guide frames are provided to extend in the first direction, and both ends of the guide frames are bent in a direction away from a side surface of the battery pack to guide the battery pack into a limiting space formed by the two sets of guide frames;
each of the guide frames is provided with a plurality of guide wheels spaced apart from each other along an extension direction of the guide frame; in a case where an edge of the conveying device contacts the guide wheels, the guide wheels rotate to limit a movement path of the conveying device.

29. A battery pack inspection method, applicable to the battery pack inspection apparatus according to any one of claims 1 to 28, wherein the battery pack inspection method comprises:
controlling, in response to a top capturing instruction, a first linear module to slide on a first support beam in a first direction, and/or controlling a first camera set to slide on the first linear module in a second direction, such that the first camera set moves relative to a top surface of a battery pack and captures a top surface image of the battery pack;
controlling, in response to a side capturing instruction, a second linear module to slide on a second support beam in the first direction, and/or controlling a second camera set to slide on the second linear module in the second direction, and/or controlling the second camera set to rotate relative to the second linear module around a third direction, such that the second camera set moves relative to a side surface or an end surface of the battery pack and captures a side surface image and an end surface image of the battery pack; and
inspecting an appearance of the battery pack based on the top surface image, the side surface image, and the end surface image.

30. The battery pack inspection method according to claim 29, wherein controlling, in response to the side capturing instruction, the second linear module to slide on the second support beam in the first direction, and/or controlling the second camera set to slide on the second linear module in the second direction, and/or controlling the second camera set to rotate relative to the second linear module around the third direction, such that the second camera set moves relative to the side surface or the end surface of the battery pack and captures the side surface image and the end surface image of the battery pack, comprises:
controlling the second linear module to slide on the second support beam in the first direction, such that the second camera set moves relative to the side surface of the battery pack, and controlling the second camera set to rotate relative to the second linear module around the third direction, such that a capturing direction of the second camera set faces the side surface of the battery pack, and the side surface image of the battery pack is captured;
controlling the second linear module to slide on the second support beam in the first direction until the second camera set extends beyond, in the first direction, a space in which the battery pack is located; and
controlling the second camera set to slide on the second linear module in the second direction, such that the second camera set moves relative to the end surface of the battery pack, and controlling the second camera set to rotate relative to the second linear module around the third direction, such that the capturing direction of the second camera set faces the end surface of the battery pack, and the end surface image of the battery pack is captured.

31. The battery pack inspection method according to claim 29 or 30, wherein the first camera set of the battery pack inspection apparatus comprises a first 3D camera, a first rotating member, and a first sliding member; the first sliding member is fixed to a first bracket, the first rotating member is connected to the first sliding member, and the first 3D camera is disposed on the first rotating member, wherein the battery pack inspection method further comprises:
controlling the first sliding member to move relative to the first bracket in a third direction, to drive the first 3D camera to move relative to a pin header connector on the top surface of the battery pack in the third direction, such that a distance between the first 3D camera and the pin header connector meets a preset distance threshold; and/or
controlling the first rotating member to rotate relative to the first bracket around the third direction, to drive the first 3D camera to rotate relative to the pin header connector around the third direction, such that an included angle between the first 3D camera and the pin header connector meets a preset included angle threshold.
